# EUROPEAN PATENT APPLICATION

(11) **EP 4 783 007 A1**
(43) Date of publication of application: **29.07.2026**
(21) Application number: 25178586.1
(22) Date of filing: 23.05.2025
(51) Int. Cl.: G06F 9/54

(54) **CROSS-APPLICATION MESSAGING SYSTEM INCLUDING TARGETED COMMUNICATIONS**

(30) Priority: 28.01.2025 US 202563750692 P; 25.04.2025 US 202519189754; 25.04.2025 US 202519189735
(71) Applicant: Palantir Technologies Inc., Aventura, Florida 33180 (US)
(72) Inventor: LEKILI, Can, Denver, 80202 (US); BRETT-BOWEN, Rhys, Denver, 80202 (US); PAEK, Jon, Denver, 80202 (US); PEFLEY, Shelby, Denver, 80202 (US); KNITTEL, Kendra, Denver, 80202 (US); LEE, John, Denver, 80202 (US); COOK, Christopher, Denver, 80202 (US); CHEN, Alice, Denver, 80202 (US); COLE, Gregory, Denver, 80202 (US); BRICKELL, Madeleine, Denver, 80202 (US); KOTA, Sasanka, Denver, 80202 (US); PETERSON, Jasmine, Denver, 80202 (US); ZAINI, Ali, Denver, 80202 (US); WANG, Margaret, Denver, 80202 (US)
(74) Representative: Derry, Paul Stefan

(57) **Abstract**

A computing system can facilitate discovery and one-on-one communication among multiple software applications of a multi-application execution environment. The system can enable software applications to broadcast and/or detect advertisement messages indicative of discoverable software applications and supported capabilities, such as for targeted messaging, sharing state, and/or the like. The system can enable software applications to detect and invoke capabilities of other software applications from outside said software applications. The system can enable software applications to share their states such that states are synchronized among multiple software applications. In some embodiments, the system can cause generation and display of interactive graphical user interfaces (GUIs) and/or of various GUI elements configured to indicate and/or facilitate discovery and/or one-on-one communication among multiple software applications, such as for detecting and invoking functionalities of software applications from outside said software applications, and/or such as for sharing states among multiple software applications.

## Description

### TECHNICAL FIELD

Implementations of the present disclosure relate to systems and techniques for improving interactions among software applications of multi-application execution environments. More specifically, implementations of the present disclosure relate to computerized systems and techniques that improve automated messaging, commands, and/or state sharing, among various other functionalities, in multi-application execution environments.

### BACKGROUND

Multi-application execution environments allow multiple software applications to run simultaneously and independently within a shared computing environment. Each software application generally operates within its own isolated space to prevent conflicts with other software applications. In this way, the computing environment allocates various system resources across different software applications.

### SUMMARY

The systems, methods, and devices described herein each have several aspects, no single one of which is solely responsible for its desirable attributes. Without limiting the scope of this disclosure, several non-limiting features will now be described briefly.

Multi-application execution environments can present usability and functionality difficulties with existing techniques and systems. Such execution environment may have computational resource management issues, intercommunication issues, and user interface and user experience fragmentation when executing multiple software applications. Existing systems may only be capable of limited multi-application support. Thus, existing multi-application execution environment systems may include software limitations and collaboration lag as software applications compete for computational resources, potentially causing delays in propagating data changes and/or causing unexpected application behavior as multiple applications operate on the same data.

The present disclosure includes a computing system that can advantageously facilitate discovery and one-on-one communication among multiple software applications of a multi-application execution environment without reducing (or while mitigating reduction of) system performance. The system can provide specifications and associated libraries that define and enable consumption and implementation of a variety of protocols useable by software applications on a client-side device (e.g., user device). These protocols, when consumed and implemented by software applications of a user device, can enable said applications to discover each other's capabilities and initiate targeted messaging. In this way, software applications may invoke each other's functionalities and/or synchronize their states. Advantageously, the system can improve computational resource management by reducing processing loads and/or memory storage requirements when using multiple software applications in a multi-application execution environment. For example, the system can ensure that software applications seamlessly communicate across multiple contexts and that said applications operate on shared data in a consistent manner, thereby reducing (or mitigating or eliminating) repetitive or unnecessary operations and reducing (or mitigating or eliminating) inconsistent application behavior. Moreover, the system can provide improved user interfaces and user functionality in such environments by reducing (or mitigating or eliminating) any reliance on human memory, knowledge, or judgment in navigating these complex application ecosystems.

Various combinations of the above and below recited features, embodiments, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings.
FIG. 1 is a block diagram illustrating an example operating environment including a system for integrating two or more software applications of a user device, according to various implementations of the present disclosure.
FIG. 2A is a block diagram illustrating one or more client-side interactions associated with messaging among two or more software applications of a user device, according to various implementations of the present disclosure.
FIG. 2B is a block diagram illustrating data that may be exchanged for messaging among two or more software applications of a user device, according to various implementations of the present disclosure.
FIGS. 2C-2E are flow diagrams illustrating example processes associated with messaging among two or more software applications of a user device, according to various implementations of the present disclosure.
FIG. 3A is a block diagram illustrating an example device and/or operating environment associated with discovering commands among two or more software applications of a user device an example operating environment.
FIG. 3B illustrates an example graphical user interface associated with detecting commands among two or more software applications of user device, according to various implementations of the present disclosure.
FIGS. 3C-3D are flow diagrams illustrating example processes associated with detecting commands among two or more software applications of a user, according to various implementations of the present disclosure.
FIG. 4A is a block diagram illustrating one or more client-side interactions associated with sharing states among two or more software applications of a user device, according to various implementations of the present disclosure.
FIG. 4B is a block diagram illustrating data that may be exchanged for sharing states among two or more software applications of a user device, according to various implementations of the present disclosure.
FIGS. 4C-4E illustrate example graphical user interfaces associated with sharing states among two or more software applications of a user device, according to various implementations of the present disclosure t.
FIGS. 4F-4G are flow diagrams illustrating example processes associated with sharing states among two or more software applications of a user device, according to various implementations of the present disclosure.
FIG. 5 is a block diagram of an example computer system useable with the various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

### Overview

Web browsers (also referred to herein as "browsers") typically restrict communication, such as cross-origin communication, between browsing contexts. "Browsing contexts" can include browser tabs, browser windows, tiles, iframes, scripts, and the like. Browsing contexts are of different origin if they have different schemes (URL protocols such as, e.g., HTTP, HTTPS, and/or the like), different hosts (domain names or IP addresses, such as, e.g., https://example.com and https://sub.example.com), or different ports (network ports, such as, e.g., 80 for HTTP, 443 for HTTPS, and/or the like). Communication between browsing contexts can be important for users (e.g., client-side users) as it allows for richer web applications that offer more dynamic and interactive experiences. For example, a user logged into an e-commerce website on one domain and a payment gateway on another would likely desire these services to exchange data such as user information, payment status, and/or the like, seamlessly. Communication between browsing contexts can be especially important when a user is performing a workflow, where the user typically has open multiple tabs or windows of the same web application or of multiple different web applications. Capabilities and/or microservices utilized in different windows of a single web application or accessed via different web applications may not be able to synergize with each other absent such communication, thereby reducing potential functionality, and making the user experience (e.g., performance of workflow) cumbersome, inefficient, and unenjoyable. Thus, it is desirable to enable one-on-one (e.g., two-way, message-specific) communication between browsing contexts of one or more web applications.

There are generally available several web standards and/or APIs that can permit browsing contexts to communicate with each other. Although some are client-side such as BroadcastChannel and postMessage, most require one or more servers for coordination, such as via HTTP protocols, WebSocket connections, and the like. Client-side web standards and/or APIs provide a number of advantages over their server-side counterparts, including but not limited to reduced processing needs and/or compute overhead, reduced storage requirements, reduced latency (e.g., due to absence of server communication such as requests and/or responses), faster user interface (UI) rendering, improved security robustness (e.g., reduced risk of exposure of sensitive data), and/or the like. However, these web standards and/or APIs suffer from various drawbacks that make communication between web applications and/or browsing contexts inconsistent, unreliable, and computationally inefficient.

BroadcastChannel is a one-to-many communication pathway that can enable communication between browsing contexts that are open to the same origin, but cannot direct communication between a source context and a target context. When a web application sends a message via BroadcastChannel, all other web applications (e.g., "listeners") on the same channel receive the same sent message. However, multiple event listeners on the receiving side can interfere with each other as BroadcastChannel lacks native tools to prioritize or differentiate between multiple listeners. Moreover, BroadcastChannel does not have a functionality that permits web applications to discover available capabilities provided by other web applications that are part of the same BroadcastChannel instance. This can make cross-application communication difficult as messages sent via BroadcastChannel may not receive a response if there is no available application capable of responding.

postMessage is a one-way communication pathway that can permit web applications to communicate across origins and specify a target with which to communicate. However, postMessage does not provide native tools that permit a receiving web application to identify and respond to specific sent messages, or tools to permit web applications to communicate their capabilities. Furthermore, postMessage requires a direct open relationship with the web applications it wants to communicate with (e.g., requires a handle on the window object), which limits communication to parent-child windows or previously stored references. Although some server-side web standards may permit some form of cross-application messaging, these standards are complex both in configuration and debugging, often utilizing substantial computational resources that reduce browser performance, requiring server-side configurations that can lead to inconsistent handling by different APIs, and having limited browser support.

The inability to differentiate between receiving web applications and/or browsing contexts and/or to respond to specific messages sent by source web applications/browsing contexts can reduce browser performance, cause duplication, and/or cause unexpected behavior in a web application. For example, multiple event listeners in multiple browser contexts may process the same message, leading to redundant or duplicate operations that can increase processing overhead and resource usage (e.g., increase computational burden and/or memory storage requirements) of a browser. This issue can be exacerbated if event listeners are handling high-frequency messages, especially in resource-constrained computing environments. In some cases, different listeners may manipulate shared resources or make assumptions about a web application's state, and perform conflicting actions based on the same received message, which can lead to race conditions and/or undesirable web application states. For example, an event listener associated with a first browser context may process a received message and delete data, whereas another event listener associated with a second browser context may attempt to update the same data, leading to errors or data loss. This can cause unpredictable web application behavior. Moreover, if a listener sends a response message (such as to synchronize state) through the same communication path, and another listener processes it (e.g., echoes the message back), this can cause a feedback loop of exponential message amplification that degrades browser performance.

Systems and methods, including associated functionality, of the present application (generally referred to herein as "the system") can advantageously provide and/or enable one-on-one (e.g., two-way, message-specific) communication between web applications and/or browsing contexts without reducing (or while mitigating reduction of) browser performance. For the sake of readability, the system is described in terms of web browsers; however, this is not intended to be limiting. In some embodiments, the system can provide and/or enable one-on-one communication between any type of software application executing in any type of multi-application execution environment, including but not limited to: operating systems; virtual machines; hypervisors; container and containerization platforms; cloud-based and/or cloud-like environments; edge computing environments; cross-platform runtime environments; and other shared and distributed systems without reducing (or while mitigating reduction of) corresponding system performance. Accordingly, in various implementations, the functionality of the present disclosure can be applied to any type of software applications (e.g., other than web applications) in any type of multi-application execution environment (e.g., other than web browsers).

The system can provide a set of specifications that define how web applications should communicate with each other, as well as a library built on top of said specifications that allow web applications to consume and implement these specifications. As further described herein, the system can leverage existing wire technology available to web applications (e.g., BroadcastChannel, postMessage) and implement any of the specifications, as further described herein. "Wire technology," such as regarding web applications, can refer to any mechanism (e.g., an API) that can facilitate communication between different parts of a web application or across web application boundaries.

The system can provide one or more specifications that define the shape of messages that can be passed between web applications and/or browsing contexts. The "shape" of the message can refer to the structure and/or format of the data being sent, such as: how the data is organized; the type of data; how the data is represented; and the like. Each message comprises a "type," which is a string describing what is being sent, and may include a "payload," which can be anything. The system can ensure that enabled web applications (e.g., web applications having access to the system library and/or using the system-provided specifications) use message types that do not conflict with other web applications. In this manner, the system can ensure that communicating web applications agree on message types and payloads.

Each message can be put in a wrapper object as defined by the specification. The wrapper can contain information that enables web applications and/or browsing contexts to identify the source of received messages, reply to specific messages, and identify target web applications/browsing contexts, as further described herein. In this way, the specification can control how enabled web applications send, receive, and/or interact with messages, and which wire methods can be used to transport said messages.

Advantageously, this can help ensure that messages intended for a particular web application are not misinterpreted and/or do not cause unexpected behavior. For example, without the specification(s) and/or library, a web application may interpret a received message type and/or payload to remove a resource, whereas the web application that initiated the message may have intended for the resource to be archived. Moreover, the system can help prevent collisions in a shared ecosystem where multiple web applications may share computational resources. Wrapped messages can help ensure that messages are routed to and processed by the correct target, avoiding a need for additional processing logic for handling interoperability of multiple web applications. Accordingly, the specification and/or library can support targeted communications among any number of web applications without reducing (or while mitigating reduction of) computational resource efficiency.

Moreover, the system can provide one or more specifications that permit enabled web applications to define and broadcast which capabilities they would like to expose to other enabled web applications, and/or permit enabled web applications to share their states, as described further herein. By leveraging the specifications, the system can facilitate discovery of and/or by, and one-on-one communication among, multiple different web applications and/or browsing contexts among multiple different origins. Advantageously, this can be done without reducing (or while mitigating reduction of) browser performance. For example, the system may utilize computationally light APIs such as BroadcastChannel and/or postMessage as a backbone for communication paths to send and receive messages among enabled web applications. This can reduce overall processing demands and memory requirements on systems and/or devices running a browser that may otherwise be impacted by configurationally complex communication standards. Moreover, by providing specifications and associated libraries that can facilitate seamless and real-time (or near real-time) discovery and one-on-one communication among web applications and/or browsing contexts, these computationally light communication paths can be scaled to accommodate use of a greater number of web applications and/or browsing contexts without (or while mitigating) deleterious effects associated with many communication methods such as described herein. For example, a web application seeking to use different microservices and/or different capabilities can discover and establish communication with other web applications that provide such capabilities, which can increase computing resource efficiency of systems and/or devices.

Generally, a web application must know of other available web applications prior to runtime of said other web applications as web applications are typically, by default, isolated from each other. Even if a web application that is launched and/or executing initiates a runtime discovery of other web applications' capabilities, the launched and/or executing web application may still require initial knowledge of where to look for the other web applications and their discovery mechanisms (e.g., a register or service to query). This can make the use of multiple web applications inefficient and complicated as it can increase computational overhead and latency as the launched and/or executing web application may need to be configured with details of other web applications. For example, an application developer may need to hardcode into a web application details about other applications (e.g., endpoints, protocols, authentication mechanisms, and/or the like). Similarly, this can reduce communication flexibility as web applications may not be able to dynamically discover and adapt to other applications' capabilities as additional web applications are launched and/or begin executing. This can further introduce scalability challenges as additions of new web applications may require web application configuration updates, redeployments, and/or testing, thereby slowing the integration process.

Advantageously, the system can permit enabled web applications to discover one another at runtime without having to know of one another beforehand (e.g., during configuration). For example, a first enabled web application can broadcast its own advertisement message and/or listen for advertisement messages originating from other web applications. These advertisement messages can include information that is unique to the advertising web application (e.g., the web application that broadcasts the advertisement message), and may indicate that the advertising web application has certain capabilities (e.g., messaging, sharing state, and/or the like). After (or upon) detecting such advertisement messages originating from a second enabled web application, the first enabled web application can identify the capabilities of the second enabled web application. In this way, the first and second web applications can begin exchanging targeted messages, sharing states, and/or invoking each other's functionalities. Advantageously, this can increase computational resource efficiency by reducing or eliminating computational overhead associated with web application configuration, redeployment, and/or testing. Moreover, by facilitating dynamic discovery of multiple different enabled web applications as such applications launch and/or begin executing, the system can provide flexibility and scaling of capabilities between previously unknown and/or newly launched/executing web applications. This can be especially important in rapidly evolving and/or large ecosystems (e.g., microservices, cloud-native architectures, and/or the like) as web applications can discover and integrate capabilities based on current context or need, enabling on-the-fly and seamless composition of application functionalities. This can improve systems that utilize multiple web applications (such as in performing a workflow) as the system can leverage application capabilities on an as-needed basis and without reliance on querying a service registry or database.

As further described herein, enabled web applications that discover each other may pair and synchronize their states (e.g., via messaging protocols provided by the specifications and/or library), such as their client-side states. The "state" of a web application can refer to the current condition, configuration, and/or behavior of the web application and/or browsing context. The system can permit enabled web applications to scope to each other such that scoped (e.g., paired) web applications can see each other's states, as further described herein. In this way, paired web applications can send and receive state messages to synchronize at least a part of their state across one or more other paired web applications. For example, the client-side state of a first paired web application may be modified by user interaction with the first web application or runtime events, whereupon the first web application can initiate a state message that includes information representative of said state. A second web application that is paired with the first web application may receive the state message and update at least part of its own state to match that of the first web application. These state updates can occur in real-time (or near real-time) as states are modified. Advantageously, this can help ensure that web applications are synchronized and consistent with one another, which can reduce processing demands and memory storage requirements as different web applications and/or browser contexts may not need to replicate information processing. For example, fewer API calls or data-fetching operations may be needed to ensure that two or more web applications and/or browser contexts reflect the latest state. Moreover, this can reduce data conflicts by ensuring that web applications are operating on the same version of data.

In some embodiments, the system can provide a user with information about web application capabilities that are available to the user. This can include capabilities provided by web applications that are not launched and/or executing (thus, the web application may not be subject to runtime discovery). For example, enabled web applications can "register" (e.g., provide a description of) their capabilities, such as their capabilities' APIs, with the library to be stored in the library. In this way, enabled web applications can consume and implement these capabilities, such as via calling a library function, thereby invoking the functionality of another web application from outside said other web application. As further described herein, the system may provide information relating to the registered capabilities of other web applications, to a user, by surfacing the capabilities in an interactive graphical user interface (GUI) of a currently launched and/or executing web application. For example, the registered capabilities of a first enabled web application (which may be unlaunched) can be displayed in the GUI of a second enabled web application as if the capabilities were already known by the second web application (e.g., hardcoded into the web application) or native capabilities of the second web application. Accordingly, the user may select a registered capability from the GUI of the second web application to invoke the functionality in the first web application.

Advantageously, various aspects of the system can improve interactive functionality utilizing multiple web applications and/or browsing contexts. For example, the system can reduce (or mitigate or eliminate) any reliance on human memory, knowledge, or judgment in identifying and/or detecting which web application functionalities and/or features are available and/or useable. This can improve navigation of often complex, multi-application ecosystems. Moreover, the system can increase computational efficiency by reducing the number of web applications that are launched and/or executing, such as in searching for a specific application functionality and/or feature. Every time a web application launches or begins executing, processing and memory resources are utilized, such as for data transfers. In this way, by reducing (or mitigating or eliminating) unnecessary web application launches, computing resources may be conserved, thereby improving system and/or device performance and reducing energy consumption.

### Example System

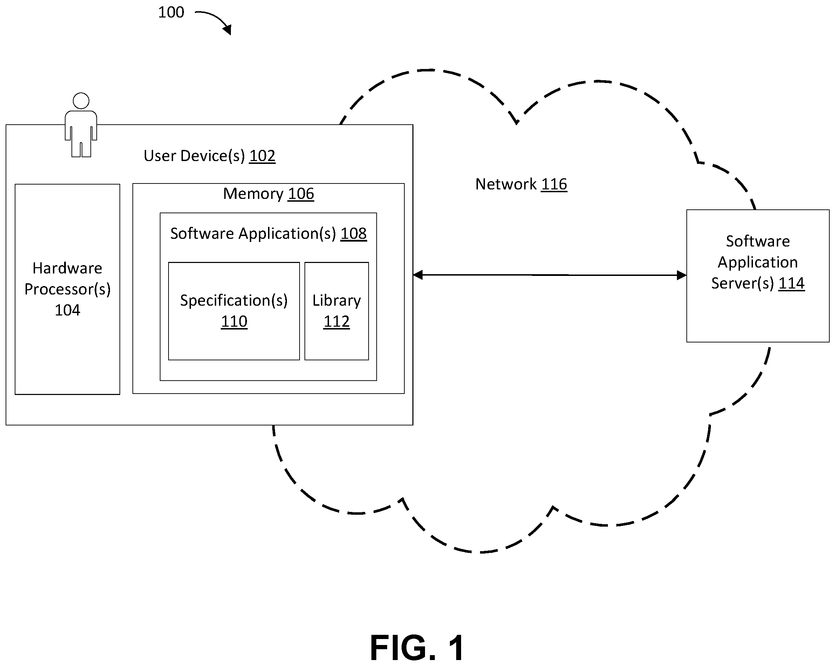

**FIG. 1** is a block diagram illustrating an example computing environment 100 of the system, including aspects and/or components configured to integrate two or more contexts of one or more software applications of a user device. The computing environment 100 can include one or more user devices 102, one or more software application servers 114, and a network 116. A user device 102 can include, but is not limited to, one or more hardware processors 104 and a memory 106. In some embodiments, the user device 102 can include one or more software applications 108, such as may be stored in the memory 106. In some embodiments, the user device 102 can include one or more specifications 110, such as may be stored in the memory 106. In some embodiments, the user device 102 can include a library 112, such as may be stored in the memory 106.

The user device(s) 102 may be a mobile communication device (e.g., a smartphone), a computer (which can be a laptop or a desktop), a tablet, a wearable device (e.g., a smart watch, glasses such as smart glasses configured to display images on a surface of the glasses), and/or any computing device of any type that may be operated by a human user.

The one or more hardware processors 104 can be configured to receive and send signals to and from various components of the user device 102 and/or the computing environment 100. The hardware processor(s) 104 may control the operations of the user device 102 and/or of various components within the computing environment 100 and/or the system. The hardware processor(s) 104 can be implemented as a processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combinations of the same, or the like. A processor can also be implemented as a combination of computing devices, such as a combination of a DSP and a microprocessor, a plurality of microprocessors, one or more microprocessors in conjunction with a DSP core, or any other such configuration.

The hardware processor(s) 104 can be configured to execute program instructions to cause the user device 102 to perform one or more operations. The hardware processor(s) 104 can be configured, among other things, to process data (e.g., analyze, cleanse, edit, reduce, wrangle, or otherwise process data), execute instructions to perform one or more functions, and/or control the operation of the user device 102 or components thereof. For example, the hardware processor(s) 104 can process data originating from one or more software applications 108 and can execute instructions to perform functions related to storing and/or transmitting such data. In some embodiments, the hardware processor(s) 104 can be configured to perform one or more operations based on user input received via, for example, an interactive user interface of the user device 102 (e.g., via taps, touches, clicks, keystrokes, and/or the like).

The memory 106 can include any computer readable storage medium and/or device (or collection of data storage mediums and/or devices), including, but not limited to, one or more memory devices that store data, including without limitation, dynamic and/or static random-access memory (RAM), programmable read-only memory (PROM), erasable programmable read-only memory (EPROM), electrically erasable programmable read-only memory (EEPROM), optical disks (e.g., CD-ROM, DVD-ROM, and/or the like), magnetic disks (e.g., hard disks, floppy disks, and/or the like), memory circuits (e.g., solid state drives, random-access memory (RAM), and/or the like), and/or the like. The memory 106 can store various data and code for locally executing one or more software applications 108 on a user device 102, including but not limited to client-side executable code (e.g., source code), scripts, libraries, frameworks, configuration files, and the like. The memory 106 can store data including software application metadata useable for messaging (e.g., targeted messaging), detecting commands, and/or sharing states among two or more software applications 108. Stored data can include user interface data that may be rendered on a display of the user device 102, such as to generate interactive graphical user interfaces (GUIs) associated with one or more software applications 108. Stored data can include user input such as received via a user interface of the user device 102. The memory 106 can store data including one or more specifications 110. The memory 106 can store data including the library 112. The memory 106 can store program instructions that when executed by one or more hardware processors of the user device 102 cause the user device 102 to perform one or more operations.

The memory 106 can store persistent data and/or non-persistent data. Persistent data may be data that is preserved (e.g., not deleted from storage) when the computing system is powered down and/or when an application is terminated. Persistent data may be stored for longer than 30 seconds, longer than 60 seconds, longer than 5 minutes, longer than 10 minutes, longer than 30 minutes, longer than 1 hour, longer than 6 hours, longer than 12 hours, longer than 24 hours, or the like. Non-persistent data may be data that is deleted or otherwise lost when the computing system is powered down and/or when an application is terminated. Non- persistent data may be stored for less than 24 hours, less than 12 hours, less than 6 hours, less than 1 hour, less than 30 minutes, less than 10 minutes, less than 5 minutes, less than 60 seconds, less than 30 seconds, less than 20 seconds, less than 10 seconds, less than 5 seconds, less than 1 seconds, or the like. Non-persistent data may be stored for a shorter period of time than persistent data. In some implementations, persistent data may be stored in non-volatile memory. In some implementations, non-persistent data may be stored in volatile memory such as RAM. The memory 106 can store data in a buffer. A buffer may store data for a period of time before deleting the data. The period of time can be fixed. The buffer may automatically delete data stored therein upon expiration of a period of time. The period of time may be between about 0.01 seconds and 0.15 seconds, between 0.1 seconds and 1.5 seconds, between 1 second and 5 seconds, between 1 second and 10 seconds, between 10 seconds and 60 seconds, between 30 seconds and 60 seconds, between 1 minute and 3 minutes, between 1 minute and 5 minutes, between 1 minute and 10 minutes, between 5 minutes and 30 minutes, between 20 minutes and 60 minutes, or greater than 60 minutes.

The user device(s) 102 can be used in a standalone manner and/or in combination with other devices. As shown in FIG. 1, the user device(s) 102 can communicate (e.g., wirelessly) with a plurality of devices, including but not limited to other user devices and/or one or more software application servers 114. Additionally, the user device(s) 102 can connect to a computing network 116 (e.g., via any of the connected devices disclosed herein, or directly). The network 116 can include any one or more communications networks. The network 116 can include a plurality of computing devices configured to communicate with one another. The network 116 can include routers. The network 116 can include the Internet. The network 116 can include any combination of networks, such as a personal area network (PAN), a local area network (LAN), a metropolitan area network (MAN), a wide area network (WAN), or the like, and may allow geographically dispersed devices, systems, databases, servers (e.g., cloud-based), and the like to connect (e.g., wirelessly) and to communicate (e.g., transfer data) with each other. Accordingly, various components of the computing environment 100 can communicate with one another directly or indirectly via any appropriate communications links and/or networks, such as network 116 (e.g., one or more communications links, one or more computer networks, one or more wired or wireless connections, the Internet, any combination of the foregoing, and/or the like).

The user device(s) 102 can communicate to the software application server(s) 114 via network 116. The user device(s) 102 may, via the network 116, communicate data to the server(s) 114 and/or receive data from the server(s) 114. For example, the user device(s) 102 may receive, from the server(s) 114, data for executing one or more software applications 108 on the user device 102, and/or data relating to one or more specifications 110 and/or library 112 useable by the software applications 108 when executing on the user device(s) 102. The user device(s) 102 may communicate with the server(s) 114 via any variety of communication protocols such as Wi-Fi (e.g., 2.4 GHz channel, 5 GHz channel), Bluetooth^{®} (e.g., Bluetooth Low Energy 5.0/Mesh), ZigBee^{®}, Z-wave^{®}, cellular telephony, 1G, 2G, 3G, 4G, 5G, infrared, near-field communication (NFC), radio frequency identification (RFID), satellite transmission, inductive coupling, capacitive coupling, proprietary protocols, any combination of the foregoing, and/or any other suitable wireless connection. In some embodiments, a user device 102 may communicate with the server(s) 114 via a different wireless communication protocol than which it communicates with the one or more other user devices. For example, a user device 102 may communicate with the server(s) 114 via a first wireless communication protocol, such as Wi-Fi, and may communicate with one or more other user devices via a second wireless communication protocol, such as Bluetooth. In some embodiments, the user device(s) 102 may not communicate directly with the server(s) 114. For example, data may be transmitted from the user device(s) 102 to the server(s) 114 via one or more intermediary devices, or vice versa.

The software application server(s) 114 may comprise one or more computing devices including one or more hardware processors. The one or more hardware processors may be configured to analyze, cleanse, edit, reduce, wrangle, or otherwise process data. The server(s) 114 may comprise program instructions configured to cause the server(s) 114 to perform one or more operations when executed by the hardware processors. The server(s) 114 may include, and/or have access to (e.g., be in communication with) a database or storage component or storage system which can include any computer readable storage medium and/or device (or collection of data storage mediums and/or devices), including, but not limited to, one or more memory devices that store data, including without limitation, dynamic and/or static random access memory (RAM), programmable read-only memory (PROM), erasable programmable read-only memory (EPROM), electrically erasable programmable read-only memory (EEPROM), optical disks (e.g., CD-ROM, DVD-ROM, and/or the like), magnetic disks (e.g., hard disks, floppy disks, and/or the like), memory circuits (e.g., solid state drives, random-access memory (RAM), and/or the like), and/or the like. In some embodiments, the server(s) 114 may host a database which can be any data structure (and/or combinations of multiple data structures) for storing and/or organizing data, including, but not limited to, relational databases (e.g., Oracle databases, PostgreSQL databases, MySQL databases and the like), non-relational databases (e.g., NoSQL databases, and the like), in-memory databases, spreadsheets, as comma separated values ("CSV") files, eXtensible markup language ("XML") files, TeXT ("TXT") files, flat files, spreadsheet files, and/or any other widely used or proprietary format for data storage. Databases can be stored in one or more data stores. In some embodiments, the server(s) 114 may include and/or be in communication with a hosted storage environment that includes a collection of physical data storage devices that may be remotely accessible and may be rapidly provisioned as needed (commonly referred to as "cloud" storage).

Data stored in and/or accessible by the server(s) 114 can include data transmittable to the user device(s) 102 for executing one or more software applications 108 locally on the user device(s) 102. In some embodiments, data stored in and/or accessible by the server(s) 114 can include data associated with one or more specifications 110 and transmittable to the user device(s) 102 for use by the software applications 108 when locally executing on the user device(s) 102. In some embodiments, data stored in and/or accessible by the server(s) 114 can include data associated with the library 112 and transmittable to the user device(s) 102 for use by the software applications 108 when locally executing on the user device(s) 102.

The software application(s) 108 can be comprised entirely on a user device 102. For example, data and code for locally executing one or more software applications 108 on the user device 102, such as described herein, can be stored in the memory 106 and accessed by one or more hardware processors 104. In some embodiments, the software application server(s) 114 may transmit such data and/or code to the user device 102 to be stored in the memory 106.

The software application(s) 108 can be web-based applications executing in a browser locally on a user device 102, such as offline-capable web applications (e.g., progressive web applications). In some embodiments, the software applications 108 can be native applications (e.g., mobile applications, desktop applications, smart watch applications, and/or the like) locally executing on the user device 102. In some embodiments, the software applications 108 can be cross-platform applications locally executing on the user device 102. The software applications 108 can be any type of software application capable of locally executing on a user device 102 in any type of multi-application execution environment, including but not limited to: web browsers (e.g., JavaScript engines, WebAssembly runtimes, extensions, plug-ins, and/or the like); operating systems (e.g., mobile OSes, desktop OSes, watch OSes, real-time OSes, virtual machine-based OSes, and/or the like); containers and containerization platforms; hypervisors (e.g., for executing multiple virtualized environments); edge computing environments; local cloud-like platforms (e.g., locally hosted environments that simulate cloud services); cross-platform run-time environments; and the like.

The software application(s) 108 can include one or more specifications 110. The specification(s) 110 may be internal to the software application(s) 108 and implemented and consumed via one or more related, front-end client APIs. For example, client-side executable code associated with the one or more APIs can be bundled within a client-side application executable of a software application 108 such that the one or more APIs run alongside or as part of the application executable. The executable code may implement one or more event emitters, listeners, and/or handlers. In this way, the software application(s) 108 can consume and implement one or more functions defined by the specification(s) 110 as the one or more hardware processors 104 of the user device 102 execute the application executable.

In some embodiments, the specification(s) 110 may be external of one or more software applications 108. For example, one or more APIs of the specification(s) 110 may be external of one or more software applications 108 and accessed by the software application(s) 108 via an API call. In this way, one or more software applications 108 can include client-side executable code that when executed, for example, via one or more hardware processors 104, initiates an API request (e.g., constructs and/or sends an API request), and the one or more software applications 108 can subsequently receive the API response and process and/or integrate data and/or a result included in the API response into the functionality of the software application(s) 108.

The specification(s) 110 can define how two or more software applications 108 locally executing on a user device 102 should communicate with each other, such as across the boundaries of a single context. Software applications may communicate with each other via sending, receiving, and responding to messages. Each message includes a type, which can be a string that describes what is being sent. In some embodiments, messages can include payloads, which may be anything such as a resource (e.g., data) that may be used by the software application that is receiving the message.

In some embodiments, the specification(s) 110 can define a wrapper object, which all software application(s) 108 can use when sending messages to other software applications. The wrapper object can include one or more properties that enable software application(s) 108 to identify the source of a message, reply to messages, and target specific software applications for messaging, as further described herein. When implementing and consuming the specification(s) 110 (e.g., via one or more front-end client APIs), each message sent by a software application 108 may be placed in a wrapper. A message placed in a wrapper may be referred to as a "wrapped message" that permits targeted and message-specific communication among two or more software applications 108. Moreover, the specification(s) 110 can define how a receiving application should interact with incoming wrapped messages, as well as the wire technology that may be leveraged to transport said messages. In this way, the specification(s) 110 can permit two or more software applications 108 that are communicating with each other to agree on message types and payloads.

In some embodiments, the specification(s) 110 can define how one or more software applications 108 can be discovered, such as for messaging. For example, the specification(s) 110 can define how the software applications(s) 108 can advertise information, such as relating to capabilities provided and/or supported by an advertising software application. In this way, software application(s) 108 can use one or more front-end client APIs relating to the specification(s) 110 to implement push and/or pull discoveries. A "push discovery" can refer to an advertisement message that is broadcast by an advertising software application 108. The advertisement message can let other listening software applications 108 know that the advertising software application 108 is discoverable. In some embodiments, the advertisement message can indicate the capabilities of the advertising software application 108 to the other listening software applications 108. A "pull discovery" can refer to a discover message, broadcast by a discovering software application 108, that elicits advertisement messages from other listening software applications 108. The elicited advertisement messages can let the discovering software application 108 know which other software applications are discoverable and what their capabilities are.

In some embodiments, the specification(s) 110 can define how one or more software applications 108 can share their states. The "state" of a software application 108 can refer to metadata, application data, graphical user interface (GUI) data, user input data, and/or other data that reflects the current condition, configuration, and/or status of the software application 108. In some embodiments, metadata can include descriptive metadata, structural metadata, and/or administrative metadata. For example, metadata can be representative of document file information, event information, document properties, object properties, versioning metadata, security and permissions, geolocation data, timestamps, and the like. In some embodiments, application data can be representative of dynamic lists, data objects, user preferences, configurations settings, filters, and the like. GUI data, in some embodiments, can be representative of GUI elements, the positions of GUI elements, the text content of GUI elements, whether a GUI element is selected or deselected, and the like. User input can include various user interactions with a software application 108, such as cursor positions, scroll positions, keypresses, clicks, taps, inputted values, selected objects, and the like.

In some embodiments, software application(s) 108 can implement scoping logic (e.g., via one or more front-end client APIs of the specification(s) 110) that enables two or more software applications 108 to pair with each other such that their client-side states are synchronized. In this way, two or more paired software applications 108 can use the specification(s) 110 (e.g., via the APIs) to initialize isolated communication paths between said software applications to initiate and receive state messages, as further described herein. Advantageously, initializing isolated communication paths for synchronizing states among paired software applications can prevent unpaired software applications from receiving and processing large volumes of unwanted state messages that may otherwise reduce operating performance (e.g., cause unexpected behavior) of the unpaired software applications.

The specification(s) 110 can define one or more state message types for sharing states among two or more paired software applications 108. State messages can be indicative of a client-side state of a software application. Paired software applications 108 can use one or more front-end client APIs relating to the specification(s) 110 for initiating, receiving, and processing state messages such that the client-side states of paired software applications are synchronized among all paired software applications. For example, after (or upon) pairing, paired software applications 108 may initiate, receive, and/or process get-state messages to share their initial client-side states. While paired, paired software applications 108 may initiate, receive, and/or process shared-state messages to share any updates in their respective client-side states, such as resulting from user interaction or other runtime events. In some embodiments, share-state messages can include one or more properties that enable a paired software application that is receiving the share-state to message to update its client-side state in response to a state change in a corresponding paired software application, as further described herein.

The software application(s) 108 can include a library 112 for implementing and consuming one or more specifications 110, rather than directly using the specification(s) 110. The library 112 may be internal to the software application(s) 108 (e.g., included as a module or software package). In some embodiments, the software application server(s) 114 may transmit data (e.g., configuration data) and/or code associated with the library 112 to be stored in the memory 106 of the user device 102. The software application(s) 108 may initialize the library 112 using the data/code received from the server(s) 114 (e.g., via the hardware processor(s) 104). The library 112 can provide reusable code for initiating calls and handling responses for front-end client APIs associated with the specification(s) 110. For example, the software application(s) 108 can call library functions to perform API actions, and the library can return API responses in pre-processed formats useable by the software application(s) 108.

### Example Features and Functionality Related to Messaging among Two or More Software Applications

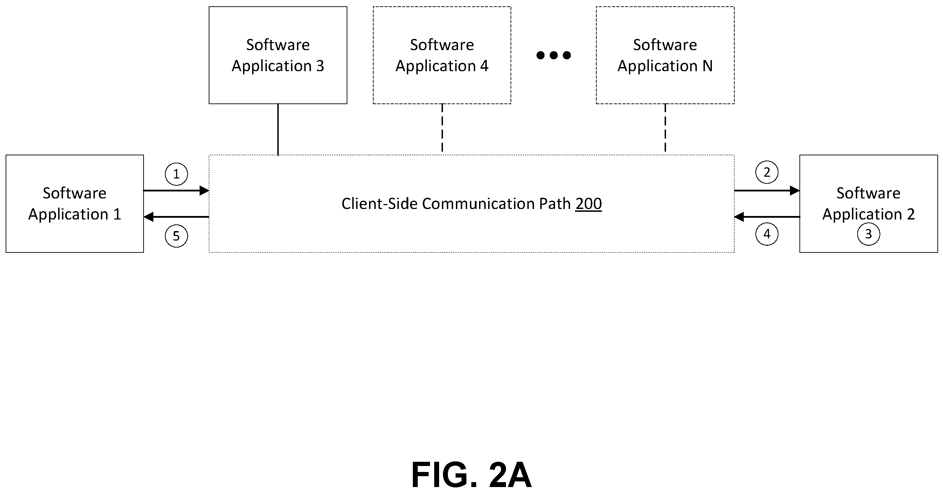

**FIG. 2A** illustrates an example set of client-side interactions associated with messaging among two or more software applications (e.g., software application(s) 108) of a user device, such as user device 102 described herein (see FIG. 1, for example). FIG. 2A includes a set of circles 1-5 that illustrate said interactions. In some embodiments, the interactions may be ordered differently and/or include more or fewer interactions.

A number N of software applications 108 are stored on the user device 102 (e.g., in the memory 106). Software applications that are launched, executing, open, and/or active can initialize or join a client-side communication path 200. The client-side communication path 200 can be any available wire technology (e.g., method, protocol, or mechanism) configured to establish and manage communication between software components, software applications, and/or software systems. In some embodiments, one or more software applications 108 may initialize and/or join the client-side communication path 200 via a call to a front-end client BroadcastChannel API. In the example of FIG. 2A, software applications 108 labeled "Software Application 1," "Software Application 2," and "Software Application 3" have initialized and/or joined the client-side communication path 200. In this way, Software Applications 1, 2, and 3 can send and receive messages via the client-side communication path 200. Software applications 108 labeled as "Software Application 4" through "Software Application N" are stored on the user device 102, but are not joined to the client-side communication path 200. Accordingly, Software Applications 4 through N cannot send or receive messages via the client-side communication path 200.

Beginning with interaction 1, Software Application 1 broadcasts an advertisement message using the specification(s) 110 via the client-side communication path 200. Software Application 1 can initiate a call to a front-end client API (either directly in code or via calling a function of library 112) associated with the specification(s) 110 that is configured for implementing any of the discovery protocols described herein. In some embodiments, Software Application 1 can include an event emitter configured to initiate advertisement messages. The event emitter may be implemented as part of the front-end client API of specification(s) 110 or within library 112. For example, client-side executable code associated with the event emitter may be bundled within a client-side application executable of Software Application 1, or may be included in the library 112, such as a library function.

At interaction 1, one or more hardware processors 104 may execute a client-side application executable of Software Application 1 that directly initiates (e.g., constructs and/or sends) the API call or that calls a library function (e.g., via library 112) to initiate the advertisement message. In some embodiments, the one or more hardware processors 104 can execute the client-side code associated with the event emitter to initiate the advertisement message.

The advertisement message can include metadata representative of at least an application identifier (ID) associated with Software Application 1. The application ID is a unique identifier for Software Application 1. The application ID can be a string that is unique to Software Application 1. In some embodiments, the application ID can be a set of metadata that is unique to Software Application 1. The application ID can be configured to enable other software applications to reference an instance of Software Application 1. In some embodiments, the advertisement message can include metadata representative of one or more capabilities of Software Application 1. For example, the advertisement message can include metadata representative of a messaging capability of Software Application 1.

Software Application 1 may initiate an advertisement message at any time during its runtime. In some embodiments, Software Application 1 may initiate an advertisement message after (or upon) initializing and/or joining the client-side communication path 200. Software Application 1 can broadcast its advertisement message throughout its runtime (e.g., until Software Application 1 terminates, crashes, and/or the like). For example, Software Application 1 may implement a heartbeat function and periodically broadcast its advertisement message during runtime, such as during discrete periods of time. In some examples, Software Application 1 may broadcast its advertisement message every 30 seconds during runtime. However, this is not intended to be limiting. Software Application 1 may broadcast its advertisement message during any interval of time.

The advertisement message can be configured to let other listening software application(s) 108 know that the advertising software application is discoverable. A "listening software application" can refer to a software application 108 that is joined to the client-side communication path 200 and loaded with (or has access to) the specification(s) 110 and/or the library 112. In some embodiments, the advertisement message can be configured to indicate capabilities of the advertising software application 108 to the other listening software application(s) 108. In the example of FIG. 2A, the advertisement message originating from Software Application 1 is configured to let Software Applications 2 and/or 3 know that Software Application 1 is available for discovery. In some embodiments, the advertisement message is configured to let Software Applications 2 and/or 3 know that Software Application 1 has a messaging capability.

Advertisement messages broadcast via the client-side communication path 200 can be detected and/or received by listening software applications, such as Software Applications 2 and/or 3. At interaction 2, Software Application 2 detects the advertisement message originating from Software Application 1. Software Application 2 can initiate a call to a front-end client API (either directly in code or via calling a function of library 112) associated with the specification(s) 110 that is configured for implementing any of the discovery protocols described herein. In some embodiments, Software Application 2 can include an event listener configured to detect advertisement messages. The event listener may be implemented as part of the front-end client API of specification(s) 110 or within library 112. For example, client-side executable code associated with the event listener may be bundled within a client-side application executable of Software Application 2, or may be included in the library 112, such as a library function.

At interaction 2, one or more hardware processors 104 may execute a client-side application executable of Software Application 2 that directly initiates the API call or that calls a library function (e.g., via library 112) to detect the advertisement message. In some embodiments, the one or more hardware processors 104 can execute the client-side code associated with the event listener to detect the advertisement message.

At interaction 3, Software Application 2 processes the advertisement message. Software Application 2 can include an event handler configured to direct how Software Application 2 responds to detected and/or received advertisement messages. For example, the event handler may be configured to process detected and/or received advertisement messages and/or to cause Software Application 2 to perform an operation based on detected and/or received advertisement messages. The event handler may be implemented as part of the front-end client API of specification(s) 110 or within library 112. For example, client-side executable code associated with the event handler may be bundled within a client-side application executable of Software Application 2, or may be included in the library 112, such as a library function.

At interaction 3, one or more hardware processors 104 may execute a client-side application executable of Software Application 2 that directly initiates the API call or that calls a library function (e.g., via library 112) to process the advertisement message. In some embodiments, the one or more hardware processors 104 can execute the client-side code associated with the event listener to process the advertisement message. For example, the hardware processor(s) 104 may parse the metadata included in the advertisement message to determine that the advertisement message originates from Software Application 1. In some examples, the hardware processor(s) may parse the metadata included in the advertisement message to detect that the capability of Software Application 1 includes a messaging capability.

In some embodiments, Software Application 3 detects the advertisement message originating from Software Application 1. However, Software Applications 4 through N, which are not joined with the client-side communication path 200, cannot detect the advertisement message.

At interaction 4, Software Application 2 initiates a message (e.g., a wrapped message) intended to be received by Software Application 1. Software application 2 can initialize a call to a front-end client API (either directly in code or via calling a library 112 function) associated with the specification(s) 110 that is configured to implement a messaging protocol, as described herein. In some embodiments, Software Application 2 can include an event emitter configured to initiate wrapped messages. The event emitter may be implemented as part of the front-end client API of specification(s) 110 or within library 112. For example, client-side executable code associated with the event emitter may be bundled within a client-side application executable of Software Application 2, or may be included in the library 112, such as a library function.

At interaction 4, one or more hardware processors 104 may execute a client-side application executable of Software Application 2 that directly initiates the API call or that calls a library function (e.g., via library 112) to initiate the wrapped message. In some embodiments, the one or more hardware processors 104 can execute the client-side code associated with the event emitter to initiate the wrapped message.

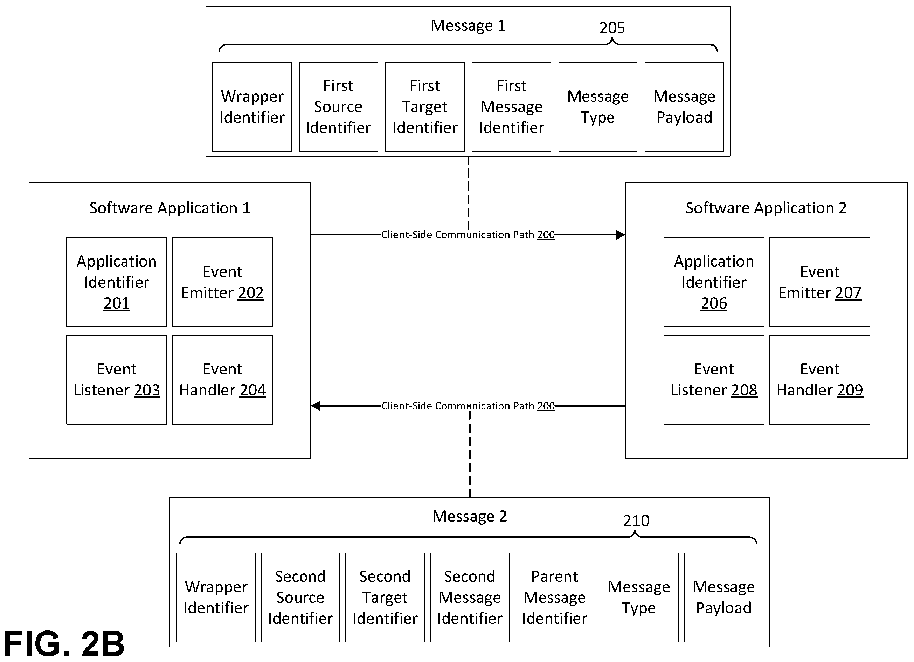

The wrapped message can include one or more properties configured to enable Software Application 2 to target Software Application 1 for messaging and/or configured to enable Software Application 1 to respond to the wrapped message. For example, the wrapped message can include metadata representative of at least a source ID associated with Software Application 2, a target ID associated with Software Application 1, and a message ID associated with the message, as further described herein (see FIG. 2B, for example).

At interaction 5, Software Application 1 receives the wrapped message originating from Software Application 2. However, software application(s) 108 that are joined to the client-side communication path 200, but that are not targeted by Software Application 2 for messaging, do not receive the wrapped message. For example, Software Application 3, which is not targeted by Software Application 2 for messaging, does not receive the message originating from Software Application 2. In this way, an event listener (initialized via an API of the specification(s) 110) associated with Software Application 3 can be configured to ignore wrapped messages that do not target Software Application 3.

In some embodiments, Software Application 1 can perform an action based on the received message. In some embodiments, Software Application 1 can initiate a new message in response to the received message, as further described herein.

Although FIG. 2A illustrates an example set of interactions 1-5, this is not intended to be limiting. In some embodiments, messaging among software application(s) 108 can include different, fewer, and/or additional client-side interactions, and/or client-side interactions performed in a different order. For example, in some embodiments, at interaction 1, Software Application 1 can broadcast a discover message, via client-side communication path 200, using the specification(s) 110 and/or library 112. Software Application 1 can initiate a call to a front-end client API (either directly in code or via calling a function of library 112) associated with the specification(s) 110 to initiate the discover message. In some embodiments, the event emitter of Software Application 1 can be further configured to initiate discover messages.

In some embodiments, at interaction 1, one or more hardware processors 104 may execute a client-side application executable of Software Application 1 that directly initiates the API call or that calls a library function (e.g., via library 112) to initiate the discover message. In some embodiments, the one or more hardware processors 104 can execute the client-side code associated with the event emitter to initiate the discover message.

Software Application 1 may initiate a discover message at any time during its runtime. In some embodiments, Software Application 1 may initiate a discover message after (or upon) initializing and/or joining the client-side communication path 200.

The discover message may be configured to invoke advertisement messages from other listening software application(s) 108, such as Software Applications 2 and/or 3. In this way, the discover message originating from Software Application 1 can be configured to invoke advertisement messages from Software Applications 2 and/or 3.

At interaction 2, in some embodiments, Software Application 2 may detect the discover message using the specification(s) 110 and/or library 112. Software Application 2 can initiate a call to a front-end client API (either directly in code or via calling a function of library 112) associated with the specification(s) 110 to detect the discover message. In some embodiments, the event listener of Software Application 2 can be further configured to detect discover messages.

In some embodiments, at interaction 2, one or more hardware processors 104 may execute a client-side application executable of Software Application 2 that directly initiates the API call or that calls a library function (e.g., via library 112) to detect the discover message. In some embodiments, the one or more hardware processors 104 can execute the client-side code associated with the event listener to detect the discover message.

At interaction 3, in some embodiments, Software Application 2 may process the discover message using the specification(s) 110 and/or library 112. Software Application 2 can initiate a call to a front-end client API (either directly in code or via calling a function of library 112) associated with the specification(s) 110 to process the discover message. In some embodiments, the event handler of Software Application 2 can be further configured to process discover messages.

In some embodiments, at interaction 2, one or more hardware processors 104 may execute a client-side application executable of Software Application 2 that directly initiates the API call or that calls a library function (e.g., via library 112) to process the discover message. In some embodiments, the one or more hardware processors 104 can execute the client-side code associated with the event handler to process the discover message.

In some embodiments, the event handler may be further configured to direct how Software Application 2 responds to the detected and/or received discover message. For example, at interaction 4, in some embodiments, one or more hardware processors 104 can execute client-side code associated with the event handler that causes Software Application 2 to broadcast its own advertisement message via, for example, its event emitter and via the client-side communication path 200.

At interaction 5, in some embodiments, Software Application 1 can detect (e.g., via its event listener) the advertisement message originating from Software Application 2, after which Software Application 1 may initiate a message (e.g., a wrapped message), such as described herein.

**FIG. 2B** is a block diagram illustrating data that may be exchanged for messaging among two or more software applications 108. As illustrated in FIG. 2B, two software applications stored on a user device 102 (e.g., in the memory 106) and loaded with (or having access to) the specification(s) 110 and/or the library 112 are labeled as "Software Application 1" and "Software Application 2." Software Applications 1 and 2 have initialized and/or joined a client-side communication path 200, such as shown and/or described with reference to FIG. 2A. At least one of Software Applications 1 or 2 has discovered the other software application (e.g., via discover and/or advertisement messages implemented via any of the discovery protocols described herein), and has detected that the other software application, respectively, has a messaging capability. Software Applications 1 and 2 can send and receive messages (labeled as "Message 1" and "Message 2") to and from one another.

Software Application 1 can include, but is not limited to, an Application ID 201, an event emitter 202, an event listener 203, and an event handler 204. As described herein, the application ID 201 can be a unique identifier for Software Application 1. The application ID 201 can be a string that is unique to Software Application 1. In some embodiments, the application ID 201 can include a set of metadata that is unique to Software Application 1. The application ID 201 can be configured to enable other software application(s) 108, such as Software Application 2, to reference an instance of Software Application 1.

The event emitter 202 can be any component, function, or process capable of generating messaging events. A "messaging event" can refer to a message initiated by a software application 108 using the specification(s) 110 and/or library 112, such as discover messages, advertisement messages, wrapped messages, state messages, and any other message types supported by the specification(s) 110 and/or library 112. The event emitter 202 can be implemented (e.g., in software) as part of a front-end client API of specification(s) 110 or within the library 112. For example, client-side executable code associated with event emitter 202 may be bundled within a client-side application executable of Software Application 1. In some examples, client-side executable code associated with event emitter 202 may be included in the library 112, such as a library function.

The event emitter 202 can be configured to initiate messages for targeted communication between two or more software application(s) 108, such as among Software Applications 1 and 2. In this way, one or more hardware processors 104 of the user device 102 can execute client-side executable code associated with the event emitter 202 to initiate a message. For example, the one or more hardware processors 104 may directly execute a client-side event emitter executable, or call a related library function, to initiate a message. In the example of FIG. 2B, the event emitter 202 initiates Message 1.

The event listener 203 can be any component, function, or process capable of detecting messaging events. The event listener 203 can be implemented (e.g., in software) as part of a front-end client API of specification(s) 110 or within the library 112. For example, client-side executable code associated with event listener 203 may be bundled within a client-side application executable of Software Application 1. In some examples, client-side executable code associated with event listener 203 may be included in the library 112, such as a library function.

The event listener 203 can be configured to detect messages that target a software application that is registered with the event listener. For example, event listener 203 can be configured to detect messages that target Software Application 1, such as Message 2. In this way, one or more hardware processors 104 of the user device 102 can execute client-side executable code associated with the event listener 203 to detect a message. For example, the one or more hardware processors 104 may directly execute a client-side event listener executable, or call a related library function, to detect any messages that target Software Application 1. In the example of FIG. 2B, the event listener 203 detects Message 2. In some embodiments, the event listener 203 can be configured to ignore any messages that do not target Software Application 1.

The event handler 204 can be any component, function, or process capable of processing messaging events. The event handler 204 can be implemented (e.g., in software) as part of a front-end client API of specification(s) 110 or within the library 112. For example, client-side executable code associated with event handler 204 may be bundled within a client-side application executable of Software Application 1. In some examples, client-side executable code associated with event handler 204 may be included in the library 112, such as a library function.

The event handler 204 can be configured to direct how a receiving software application responds to a message. For example, the event handler 204 can be configured to direct how Software Application 1 responds to Message 2. In this way, one or more hardware processors 104 of the user device 102 can execute client-side executable code associated with the event handler 204 to process detected and/or received messages, and/or initiate an operation based on said messages. For example, the one or more hardware processors 104 may directly execute a client-side event handler executable, or call a related library function, to process a message and/or initiate an operation based on the message. In the example of FIG. 2B, the event handler 204 processes Message 2. In some embodiments, the event handler 204 may cause Software Application 1 to perform an operation based on Message 2. For example, Software Application 1 may initiate a message (e.g., via event emitter 202) that is a direct response to Message 2.

As further illustrated in the example of FIG. 2B, Software Application 1 initiates Message 1. Software Application 1 can initiate Message 1 via event emitter 202. Message 1 is transmitted via client-side communication path 200 and targets Software Application 2. Message 1 can include, but is not limited to, one or more properties 205 configured to enable communication between Software Applications 1 and 2. In some embodiments, properties 205 can include at least a first source ID, a first target ID, and a first message ID. For example, Message 1 can include metadata representative of at least the first source ID, the first target ID, and the first message ID. In some embodiments, properties 205 can include a wrapper identifier. Properties 205, in some embodiments, can include a message type. In some embodiments, properties 205 can include a message payload.

A source ID can be a unique identifier for a software application that is initiating a message (referred to herein as the "originating software application"). The source ID can be a string that is unique to the originating software application. In some embodiments, the source ID can be a set of metadata that is unique to the originating software application. In the example of FIG. 2B, the first source ID is a unique identifier for Software Application 1. In some embodiments, the first source ID is the same as the application ID 201 that is associated with Software Application 1. The source ID can be configured to enable a receiving software application to identify the origin of the message. As illustrated in FIG. 2B, the first source ID can enable Software Application 2 to identify Software Application 1 as the originator of Message 1.

A target ID can be a unique identifier for a software application that is the intended recipient of the message (referred to herein as the "receiving software application"). The target ID can be a string that is unique to the receiving software application. In some embodiments, the target ID can be a set of metadata that is unique to the receiving software application. In the example of FIG. 2B, the first target ID is a unique identifier for Software Application 2. The first target ID may be the same as application ID 206 that is associated with Software Application 2. The target ID can be configured to enable an originating software application to target another software application for messaging. As illustrated in FIG. 2B, the first target ID can enable Software Application 1 to target Software Application 2 for messaging.

A message ID can be a unique identifier for a message. The message ID can be a string that is unique to the message. In some embodiments, the message ID can be a set of metadata that is unique to the message. In the example of FIG. 2B, the first message ID is a unique identifier for Message 1. The message ID can be configured to enable a receiving software application to respond to the message, as further described herein. As illustrated in FIG. 2B, the first message ID can enable Software Application 2 to initiate a message (e.g., Message 2) that is a direct response to Message 1.

A wrapper identifier can be unique identifier that is configured to indicate that the message is a wrapped message. The wrapper identifier can be configured to enable receiving software applications to appropriately detect and process the message (e.g., via event listeners and handlers initialized via front-end client APIs of the specification(s) 110). In the example of FIG. 2B, Message 1 includes a wrapper identifier that identifies Message 1 as a wrapped message. In this way, Software Application 2 can appropriately detect and process Message 1, such as for initiating Message 2.

A message type can be a string. The message type can be configured to enable a receiving software application to identify what the message is. A message payload can be anything. In some embodiments, the payload is a resource (e.g., data) that is useable by the receiving software application when performing an action, such as an action associated with a capability of the receiving software application.

As further illustrated in FIG. 2B, Software Application 2 can include, but is not limited to, an application ID 206, an event emitter 207, an event listener 208, and an event handler 209. receives Message 1. The application ID 206 can include one or more features and/or functions similar or identical to any of those shown and/or described with reference to application ID 201. In the example of FIG. 2B, application ID 206 is a unique identifier for Software Application 2. The application ID 206 can be a string that is unique to Software Application 2. In some embodiments, the application ID can be a set of metadata that is unique to Software Application 2.

The event emitter 207 can be any component, function, or process capable of generating messaging events. The event emitter 207 can include one or more features and/or functions similar or identical to any of those shown and/or described with reference to event emitter 202. The event emitter 207 can be implemented (e.g., in software) as part of a front-end client API of specification(s) 110 or within the library 112. For example, client-side executable code associated with event emitter 207 may be bundled within a client-side application executable of Software Application 2. In some examples, client-side executable code associated with event emitter 207 may be included in the library 112, such as a library function.

The event emitter 207 can be configured to initiate messages for targeted communication between two or more software application(s) 108, such as among Software Applications 1 and 2. In this way, one or more hardware processors 104 of the user device 102 can execute client-side executable code associated with the event emitter 207 to initiate a message. For example, the one or more hardware processors 104 may directly execute a client-side event emitter executable, or call a related library function, to initiate a message. In the example of FIG. 2B, event emitter 207 initiates Message 2.

The event listener 208 can be any component, function, or process capable of detecting messaging events. The event listener 208 can include one or more features and/or functions similar or identical to any of those shown and/or described with reference to event listener 203. The event listener 208 can be implemented (e.g., in software) as part of a front-end client API of specification(s) 110 or within the library 112. For example, client-side executable code associated with event listener 208 may be bundled within a client-side application executable of Software Application 2. In some examples, client-side executable code associated with event listener 208 may be included in the library 112, such as a library function.

The event listener 208 can be configured to detect messages that target a software application registered with the event listener. For example, event listener 208 can be configured to detect messages that target Software Application 2, such as Message 1. In this way, one or more hardware processors 104 of the user device 102 can execute client-side executable code associated with the event listener 208 to detect a message. For example, the one or more hardware processors 104 may directly execute a client-side event listener executable, or call a related library function, to detect any messages that target Software Application 2. In the example of FIG. 2B, event listener 208 detects Message 1. In some embodiments, the event listener 208 can be configured to ignore any messages that do not target Software Application 2.

The event handler 209 can be any component, function, or process capable of processing messaging events. The event handler 209 can include one or more features and/or function similar or identical to any of those shown and/or described with reference to event handler 204. The event handler 209 can be implemented (e.g., in software) as part of a front-end client API of specification(s) 110 or within the library 112. For example, client-side executable code associated with event handler 209 may be bundled within a client-side application executable of Software Application 2. In some examples, client-side executable code associated with event handler 209 may be included in the library 112, such as a library function.

The event handler 209 can be configured to direct how a receiving software application responds to a message. For example, the event handler 209 can be configured to direct how Software Application 2 responds to Message 1. In this way, one or more hardware processors 104 of the user device 102 can execute client-side executable code associated with the event handler 209 to process detected and/or received messages, and/or initiate an action based on said messages. For example, the one or more hardware processors 104 may directly execute a client-side event handler executable, or call a related library function, to process a message and/or initiate an action based on the message. In the example of FIG. 2B, the event handler 209 processes Message 1. In some embodiments, the event handler 209 may cause Software Application 2 to perform an operation based on Message 1. For example, Software Application 2 may initiate Message 2 (e.g., via event emitter 207) as a direct response to Message 1.

Continuing with the discussion of the example of FIG. 2B, Software Application 2 initiates Message 2. Software Application 2 can initiate Message 2 via event emitter 207. In some embodiments, Message 2 is a direct response to Message 1. Message 2 is transmitted via client-side communication path 200 and targets Software Application 1. Message 2 can include, but is not limited to, one or more properties 210 configured to enable communication between Software Applications 1 and 2. In some embodiments, properties 210 can include at least a second source ID, a second target ID, and a second message ID. For example, Message 2 can include metadata representative of at least the second source ID, the second target ID, and the second message ID. In some embodiments, properties 210 may include a parent message ID. For example, Message 2 can include metadata representative of the parent message ID. In some embodiments, properties 210 can include a wrapper identifier. Properties 210, in some embodiments, can include a message type. In some embodiments, properties 210 can include a message payload.

The second source ID can include one or more features and/or functions similar or identical to any of those shown and/or described with reference to the first source ID. In the example of FIG. 2B, the second source ID is a unique identifier for Software Application 2. The second source ID may be a string that is unique to Software Application 2. In some embodiments, the second source ID can be a set of metadata that is unique to Software Application 2. In some embodiments, the second source ID can be the same as the application ID 206 that is associated with Software Application 2. The second source ID can be configured to enable Software Application 1 to identify Software Application 2 as the originator of Message 2.

The second target ID can include one or more features and/or function similar or identical to any of those shown and/or described with reference to the first target ID. In the example of FIG. 2B, the second target ID is a unique identifier for Software Application 1. The second target ID may be a string that is unique to Software Application 1. In some embodiments, the second target ID can be a set of metadata that is unique to Software Application 1. In some embodiments, the second target ID can be the same as the application ID 201 that is associated with Software Application 1. The second target ID can be configured to enable Software Application 2 to target Software Application 1 for messaging.

The second message ID can include one or more features and/or functions similar or identical to any of those shown and/or described with reference to the first message ID. In the example of FIG. 2B, the second message ID is a unique identifier for Message 2. The second message ID can be a string that is unique to Message 2. In some embodiments, the second message ID can be a set of metadata that is unique to Message 2. The second message ID can be configured to enable Software Application 1 to initiate a message that is a direct response to Message 2.

A parent message ID can be a unique identifier for a message that is being directly responded to (referred to herein as the "respondable message"). The parent message ID can be a string that is unique to the respondable message. In some embodiments, the parent message ID can be a set of metadata that is unique to the respondable message. In some embodiments, the parent message ID that is included in a field of the response message (e.g., the message that is initiated to respond to the respondable message) can be the same as the message ID associated with the respondable message. In the example of FIG. 2B, the parent message ID included with Message 2 is the same as the message ID associated with Message 1. In this way, the parent message ID can be configured to indicate that an initiated message is a direct message to an earlier detected and/or received message. As illustrated in FIG. 2B, the parent message ID included with Message 2 indicates that Message 2 is a direct response to Message 1.

### Example Routines Relating to Messaging among Two or More Software Applications

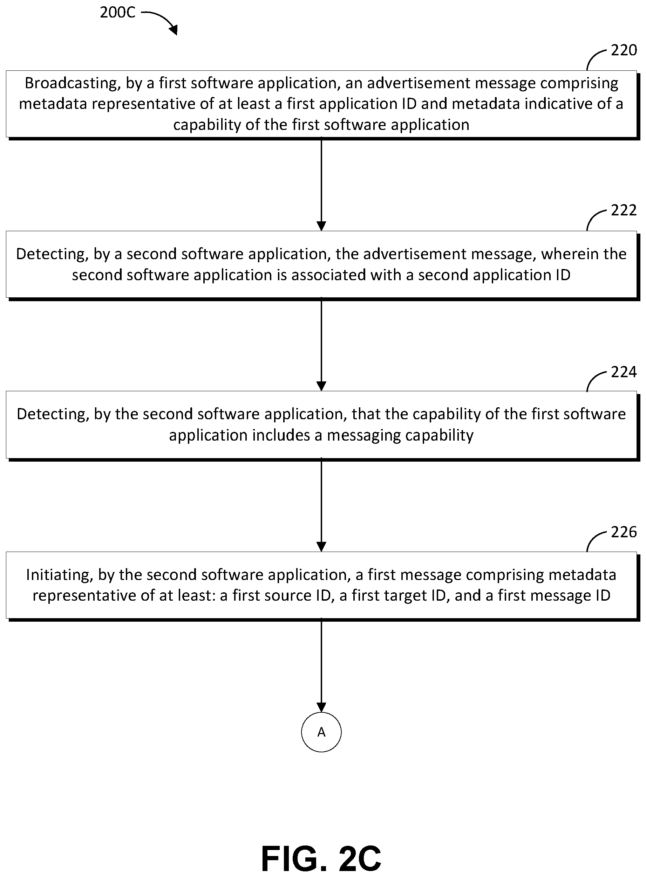

**FIG. 2C** is a diagram illustrating an example routine 200C for messaging among two or more software applications (e.g., software application(s) 108). The routine 200C, or portions thereof, can be implemented by a computing device such as user device 102. In some embodiments, the routine 200C, or portions thereof, can be performed by a computing device associated with the user device 102, such as one or more hardware processors 104 described herein.

At block 220, a first software application can broadcast an advertisement message. The first software application can include an event emitter configured to initiate advertisement messages. The event emitter can include one or more features and/or functions similar or identical to any of those of event emitters shown and/or described with reference to FIGS. 2A-2B. The event emitter may be initialized via one or more specifications (e.g., specification(s) 110) and used by the first software application to consume and implement any of the discovery protocols described herein. For example, the event emitter can be implemented (e.g., in software) as part of a front-end client API of the specification(s) or within a library (e.g., library 112). In this way, client-side executable code associated with the event emitter may be bundled within a client-side application executable of the first software application, or may be included in the library, such as a library function.

In some embodiments, at block 220, a processor (e.g., hardware processor(s) 104) can execute the client-side code associated with the event emitter to initiate the advertisement message.

At block 220, the advertisement message can include metadata representative of a first application identifier ("ID") associated with the first software application. The first application ID can be a unique identifier for the first software application. The first application ID can include one or more features and/or functions similar or identical to any of those of application IDs shown and/or described with reference to FIGS. 2A-2B. For example, the first application ID can be configured to enable other software applications to reference an instance of the first software application. In some embodiments, the first application ID can be a string that is unique to the first software application. In some embodiments, the first application ID can be a set of metadata that is unique to the first software application. The advertisement message, in some embodiments, can include metadata representative of a capability of the first software application. The capability may be a messaging capability.

In some embodiments, at block 220, the advertisement message can be configured to indicate to other listening software applications that the first software application is discoverable.

At block 222, a second software application can detect and/or receive the advertisement message. The second software application can include an event listener configured to detect advertisement messages. The event listener can include one or more features and/or functions similar or identical to any of those of event listeners shown and/or described with reference to FIGS. 2A-2B. The event listener may be initialized via the specification(s) and used by the second software application to consume and implement any of the discovery protocols described herein. For example, the event listener can be implemented (e.g., in software) as part of a front-end client API of the specification(s) or within the library. In this way, client-side executable code associated with the event listener may be bundled within a client-side application executable of the second software application, or may be included in the library, such as a library function.

At block 222, the processor can execute the client-side code associated with the event listener to detect and/or the advertisement message.

In some embodiments, at block 222, the second software application can be associated with a second application ID. The second application ID can be a unique identifier for the second software application. The second application ID can include one or more features and/or functions similar or identical to any of those of application IDs shown and/or described with reference to FIGS. 2A-2B. For example, the second application ID can be configured to enable other software applications to reference an instance of the second software application. In some embodiments, the second application ID can be a string that is unique to the second software application. In some embodiments, the second application ID can be a set of metadata that is unique to the second software application.

At block 224, the second software application can detect that the capability of the first software application includes a messaging capability. The second software application can include an event handler configured to process detected and/or received messages, such as the advertisement message. In some embodiments, the event handler can be configured to cause the second software application to perform an operation based on the detected and/or received messages. The event handler can include one or more features and/or functions similar or identical to any of those of event handler shown and/or described with reference to FIGS. 2A-2B. The event handler may be initialized via the specification(s) and used by the second software application to consume and implement any of the discovery protocols described herein. For example, the event handler can be implemented (e.g., in software) as part of a front-end client API of the specification(s) or within the library. In this way, client-side executable code associated with the event handler may be bundled within a client-side application executable of the second software application, or may be included in the library, such as a library function.

At block 224, the processor can execute client-side code associated with the event handler to process the detected advertisement message. In some embodiments, the processor may parse the metadata included in the advertisement message and determine that the first software application has a messaging capability.

In some embodiments, at block 224, the processor may parse the metadata of the detected advertisement message and determine that the advertisement message originated from the first software application. In this way, the second software application can discover the first software application.

At block 226, the second software application can initiate a first message. For example, in some embodiments, the event handler of the second software application can be further configured to cause the second software application to initiate a message in response to detecting that a discovered software application has a messaging capability. In this way, the second software application can include an event emitter configured to initiate a message, such as a wrapped message, as described herein. The event emitter can include one or more features and/or functions similar or identical to any of those of event emitters shown and/or described with reference to FIGS. 2A-2B. The event emitter may be initialized via the specification(s) and used by the second software application to consume and implement any of the messaging protocols described herein. For example, the event emitter can be implemented (e.g., in software) as part of a front-end client API of the specification(s) or within the library. In this way, client-side executable code associated with the event emitter may be bundled within a client-side application executable of the second software application, or may be included in the library, such as a library function.

At block 226, the processor can execute the client-side code associated with the event emitter to initiate the first message. The first message can include metadata representative of at least a first target ID, a first source ID, and a first message ID.

The first target ID can be a unique identifier for the first software application. The first target ID can include one or more features and/or functions similar or identical to any of those of target IDs shown and/or described with reference to FIGS. 2A-2B. The first target ID can be a string that is unique to the first software application. In some embodiments, the first target ID can be a set of metadata that is unique to the first software application. In some embodiments, the first target ID may be the same as the first application ID. At block 226, the first target ID can be configured to enable other software applications (e.g., the second software application) to target the first software application for messaging.

The first source ID can be a unique identifier for the second software application. The first source ID can include one or more features and/or functions similar or identical to any of those of source IDs shown and/or described with reference to FIGS. 2A-2B. The first source ID can be a string that is unique to the second software application. In some embodiments, the first source ID can be a set of metadata that is unique to the second software application. In some embodiments, the first source ID may be the same as the second application ID. At block 226, the first source ID can be configured to enable other software applications (e.g., the first software application) to determine that the initiated message originates from the second software application.

The first message ID can be a unique identifier for the first message. The first message ID can include one or more features and/or functions similar or identical to any of those of message IDs shown and/or described with reference to FIGS. 2A-2B. The first message ID can be a string that is unique to the first message. In some embodiments, the first message ID can be a set of metadata that is unique to the first message. At block 226, the first message ID can be configured to enable other software applications (e.g., the first software application) to respond to the first message.

In some embodiments, at block 226, the first source ID and the first message ID can be configured to enable the first software application to initiate a message that targets the second software application and that is a response to the first message.

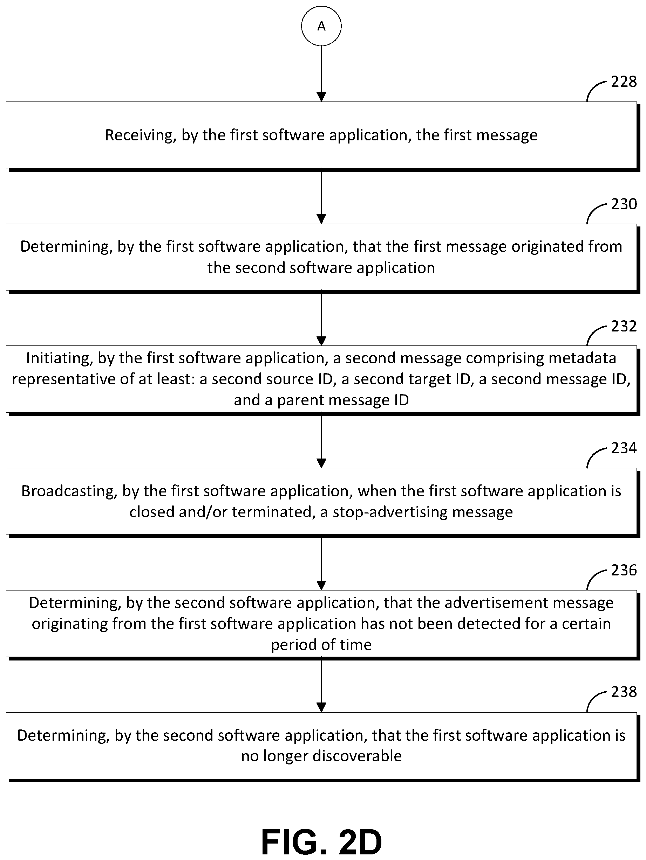

In FIG. 2C, block 226 is connected to a circle annotated with reference alpha "A" indicating that the routine 200C optionally continues between FIGS. 2C and 2D. Although multiple blocks are illustrated in FIG. 2D, not all blocks may necessarily be performed in the ordinary course when performing routines associated with messaging among two or more software applications. Moreover, although blocks depicted in FIG. 2D are illustrated in a particular order, this is not intended to be limiting. One or more blocks illustrated in FIG. 2D may be performed in one or more different orders, may be performed simultaneously, may be combined into fewer blocks, may be separated into additional blocks, or may not be performed at all.

As illustrated in FIG. 2D, in some embodiments, the routine 200C may proceed to block 228. At block 228, the first software application can detect and/or receive the first message. The first software application can include an event listener configured to detect and/or receive messages, such as wrapped messages. The event listener can include one or more features and/or functions similar or identical to any of those of event listeners shown and/or described with reference to FIGS. 2A-2B. The event listener may be initialized via the specification(s) and used by the first software application to consume and implement any of the messaging protocols described herein. For example, the event listener can be implemented (e.g., in software) as part of a front-end client API of the specification(s) or within the library. In this way, client-side executable code associated with the event listener may be bundled within a client-side application executable of the first software application, or may be included in the library, such as a library function.

At block 228, the processor can execute the client-side code associated with the event listener to detect and/or receive the first message.

In some embodiments, the routine 200C may proceed to block 230. At block 230, the first software application can determine that the first message originated from the second software application. The first software application may make the determination based on the first source ID included with the first message. In this way, the first software application can include an event handler configured to process detected and/or received messages. The event handler can include one or more features and/or functions similar or identical to any of those of event handler shown and/or described with reference to FIGS. 2A-2B. The event handler may be initialized via the specification(s) and used by the first software application to consume and implement any of the messaging protocols described herein. For example, the event handler can be implemented (e.g., in software) as part of a front-end client API of the specification(s) or within the library. In this way, client-side executable code associated with the event handler may be bundled within a client-side application executable of the first software application, or may be included in the library, such as a library function.

At block 230, the processor may parse the metadata of the received first message and determine that the first message originated from the first software application.

As depicted in FIG. 2D, in some embodiments, the routine 200C may proceed to block 232. At block 232, the first software application can initiate a second message. For example, in some embodiments, the event handler of the first software application can be further configured to cause the first software application to initiate a message in response to receiving the first message. In this way, the first software application can include an event emitter configured to initiate a message, such as a wrapped message, as described herein. The event emitter can include one or more features and/or functions similar or identical to any of those of event emitters shown and/or described with reference to FIGS. 2A-2B. In some embodiments, the event emitter may be the same event emitter that was used by the first software application to broadcast the advertisement message. The event emitter may be initialized via the specification(s) and used by the first software application to consume and implement any of the messaging protocols described herein. For example, the event emitter can be implemented (e.g., in software) as part of a front-end client API of the specification(s) or within the library. In this way, client-side executable code associated with the event emitter may be bundled within a client-side application executable of the first software application, or may be included in the library, such as a library function.

At block 232, the processor can execute the client-side code associated with the event emitter to initiate the second message. The second message can include metadata representative of at least a second target ID, a second source ID, a second message ID, and a parent message ID.

The second target ID can be a unique identifier for the second software application. The second target ID can include one or more features and/or functions similar or identical to any of those of target IDs shown and/or described with reference to FIGS. 2A-2B. The second target ID can be a string that is unique to the second software application. In some embodiments, the second target ID can be a set of metadata that is unique to the second software application. In some embodiments, the second target ID may be the same as the second application ID. At block 232, the second target ID can be configured to enable other software applications (e.g., the first software application) to target the second software application for messaging.

The second source ID can be a unique identifier for the first software application. The second source ID can include one or more features and/or functions similar or identical to any of those of source IDs shown and/or described with reference to FIGS. 2A-2B. The second source ID can be a string that is unique to the first software application. In some embodiments, the second source ID can be a set of metadata that is unique to the first software application. In some embodiments, the second source ID may be the same as the first application ID. At block 232, the second source ID can be configured to enable other software applications (e.g., the second software application) to determine that the initiated message originates from the first software application.

The second message ID can be a unique identifier for the second message. The second message ID can include one or more features and/or functions similar or identical to any of those of message IDs shown and/or described with reference to FIGS. 2A-2B. The second message ID can be a string that is unique to the second message. In some embodiments, the second message ID can be a set of metadata that is unique to the second message. At block 232, the second message ID can be configured to enable other software applications (e.g., the second software application) to respond to the second message.

The parent message ID can be a unique identifier for the first message. The parent message ID can include one or more features and/or functions similar or identical to any of those of parent message IDs shown and/or described with reference to FIGS. 2A-2B. The parent message ID can be a string that is unique to the first message. In some embodiments, the parent message ID can be a set of metadata that is unique to the first message. At block 232, the parent message ID can be configured to enable other software applications (e.g., the first software application) to respond to the first message via the second message.

The routine 200C, in some embodiments, may proceed to block 234. At block 234, the first software application may broadcast a stop-advertising message. In this way, the first software application can include an event emitter configured to initiate the stop-advertising message. In some embodiments, the event emitter used for broadcasting the stop-advertising message may be the same event emitter that is used for broadcasting advertisement messages.

At block 234, the processor may execute client-side code associated with the event emitter to initiate the stop-advertising message. In some embodiments, the first software application can broadcast the stop-advertising message when the first software application closes and/or terminates.

The stop-advertising message can include metadata representative of a source ID associated with the first software application, such as described herein. The source ID included with the stop-advertising message can be configured to enable other software applications (e.g., the second software application) to determine that the stop-advertising message originated from the first software application.

The stop advertising message can be configured to let other software applications (e.g., the second software application) know that the first software application is no longer discoverable. Accordingly, other software applications (such as the second software application) may no longer be able to target the first software application for messaging.

In some embodiments, the routine 200C may proceed to block 236. At block 236, the second software application can determine that an advertisement message originating from the first software application has not been detected for a certain period of time. For example, advertisement messages (such as those broadcast by the first software application) can be timestamped. After (or upon) detection of an advertisement message, the processor can record a start time based on the timestamp of the detected advertisement message. The processor may perform this operation in an open loop such that the processors records, as the start time, the timestamp of the most recently detected advertisement message. The processor, using an internal timer, can monitor a duration of time that has elapsed since recording the most recent start time.

The routine 200C, in some embodiments, may proceed to block 238. At block 238, the second software application can determine that the first software application is no longer discoverable. In some embodiments, at block 238, the second software application may determine that the first software application is no longer discoverable based on a detected and/or received stop-advertisement message originating from the first software application. For example, an event listener of the second software application may be configured to detect and/or receive stop-advertisement messages, and an event handler of the second software application may be configured to direct how the second software application responds to detected and/or received stop-advertisement messages. In some embodiments, the event handler may be configured to process a stop-advertisement message as indicating that the software application from which the stop-advertisement message originates is no longer discoverable. In this way, the processor may parse the metadata included with the stop-advertisement message to determine, based on the source ID, that the stop-advertisement message originated from the first software message. Accordingly, the processor may determine that the first software application is no longer discoverable.

In some embodiments, at block 238, the second software application may determine that the first software application is no longer discoverable based on an elapsed duration of time since detection of a most recent advertisement message originating from the first software application. In some embodiments, the second software application may make this determination according to a timeout period. In this way, the processor may be configured to determine whether the first software application is no longer discoverable based on whether the measured elapsed time duration satisfies a threshold condition. The threshold condition may be fixed or programmable. In some embodiments, the threshold condition can be set and/or modified by a user utilizing a user device (e.g., user device 102). The threshold condition can include limits such as lower and upper limits.

In some embodiments, the processor may be configured to determine whether the measured elapsed time duration satisfies the threshold condition based on a comparison between the measured elapsed time duration and a predetermined time duration. For example, based on a determination that the measured elapsed time duration is less than the predetermined time duration, the processor may determine that the measured elapsed time duration satisfies the threshold condition. Based on a determination that the measured elapsed time duration satisfies the threshold condition, the processor may determine that the first software application is still discoverable. In some examples, based on a determination that the measured elapsed time duration is at or greater than the predetermined time duration, the processor may determine that the measured elapsed time duration does not satisfy the threshold condition. Based on a determination that the measured elapsed time duration does not satisfy the threshold condition, the processor may determine that the first software application is no longer discoverable.

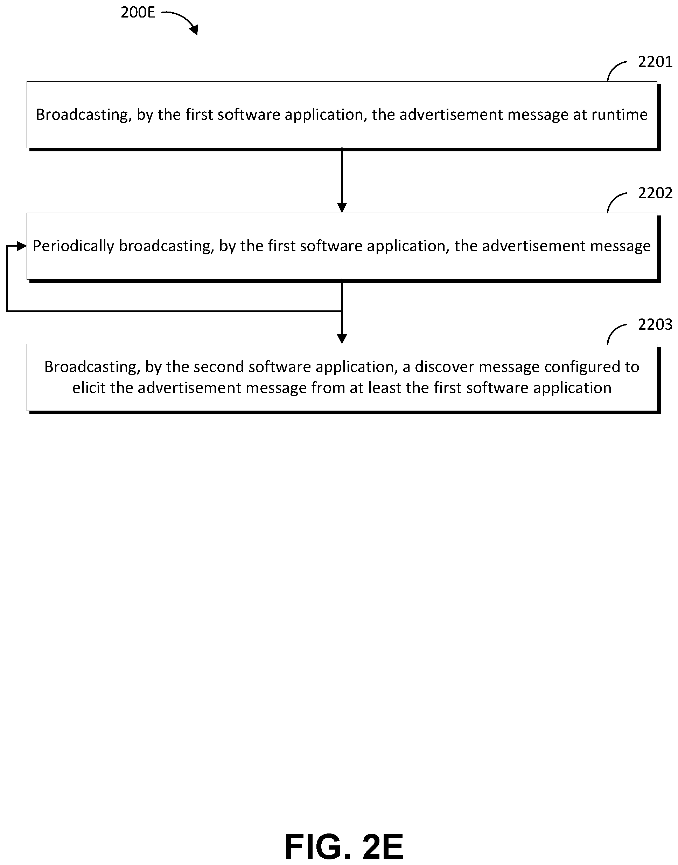

FIG. 2E is a diagram illustrating an example routine 200E for messaging among two or more software applications (e.g., software application(s) 108). The routine 200E, or portions thereof, can be implemented by a computing device such as user device 102. In some embodiments, the routine 200E, or portions thereof, can be performed by a computing device associated with the user device 102, such as one or more hardware processors 104 described herein.

Although multiple blocks are illustrated in FIG. 2E, not all blocks may necessarily be performed in the ordinary course when performing routines associated with messaging among two or more software applications. Moreover, although blocks depicted in FIG. 2E are illustrated in a particular order, this is not intended to be limiting. One or more blocks illustrated in FIG. 2E may be performed in one or more different orders, may be performed simultaneously, may be combined into fewer blocks, may be separated into additional blocks, or may not be performed at all.

At block 2201, the first software application (such as shown and/or described with reference to FIGS. 2C-2D) may broadcast the advertisement message at runtime of the first software application. In some embodiments, the first software application may broadcast the advertisement message at any time during runtime. For example, the first software application may broadcast the advertisement message after (or upon) launching and/or executing. In some examples, the first software application may broadcast the advertisement message after (or upon) initializing and/or joining a client-side communication path, such as client-side communication path 200 (see FIGS. 2A-2B, for example).

At block 2202, the first software application may periodically broadcast the advertisement message. The first software application may periodically broadcast the advertisement message during runtime of the first software application. For example, the first software application may implement a heartbeat function and broadcast the advertisement message during discrete periods of time. In this way, the processor may perform block 2202 in an open loop, such as while the first software application is launched and/or executing. In some embodiments, the first software application may broadcast the advertisement message every 30 seconds during runtime. However, this is not intended to be limiting. At block 2202, the first software application can broadcast the advertisement message according to any interval of time.

At block 2203, the second software application (such as shown and/or described with reference to FIGS. 2C-2D) can broadcast a discover message. The second software application can include an event emitter configured to initiate discover messages. The event emitter can include one or more features and/or functions similar or identical to any of those of event emitters shown and/or described with reference to FIGS. 2A-2D. The event emitter may be initialized via the specification(s) and used by the second software application to consume and implement any of the discovery protocols described herein. For example, the event emitter can be implemented (e.g., in software) as part of a front-end client API of the specification(s) or within the library. In this way, client-side executable code associated with the event emitter may be bundled within a client-side application executable of the second software application, or may be included in the library, such as a library function.

At block 2203, a processor (e.g., hardware processor(s) 104) can execute the client-side code associated with the event emitter to initiate the discover message. The discover message can be configured to invoke advertisement messages from other software applications (e.g., the first software application). For example, the discover message originating from the second software application can be configured to invoke the advertisement message originating from the first software application.

### Example Features and Functionality Related to Detecting Capabilities among Two or More Software Applications

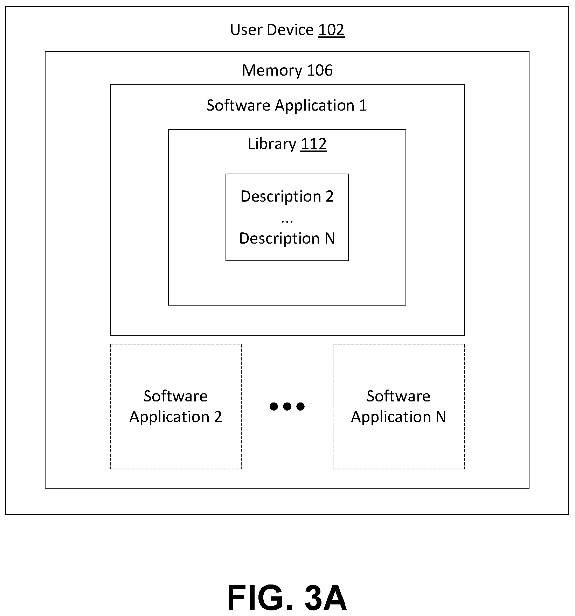

**FIG. 3A** is a block diagram illustrating an example operating environment associated with discovering commands among two or more software applications (e.g., software application(s) 108) of a user device, such as user device 102 described herein (see FIG. 1, for example). As depicted in FIG. 3A, the user device 102 includes a number N of software applications that are stored in the memory 106. A software application labeled as "Software Application 1" is loaded in memory 106. For example, Software Application 1 may be launched, executing, open, and/or active. As further depicted in FIG. 3A, software applications labeled as "Software Application 2" through "Software Application N" are not loaded in memory 106. For example, Software Applications 2 through N may not be launched and/or executing.

Software Application 1 includes or has access to the library 112. The library 112 may include a set of descriptions that are associated with other software applications that are stored on the user device 102, such as in the memory 106. For example, as illustrated in FIG. 3A, the library 112 includes description 2 through description N. Descriptions 2 through N may be associated with Software Applications 2 through N, respectively.

A description may be representative of a command that is associated with a software application. The description can enable the software application to express a functionality that is provided by the software application. In this way, the command can be indicative of a capability of the software application. The capability may be associated with an action that is performable by the software application, such as when the command is executed by the user device 102 (e.g., via one or more hardware processors 104). For example, as depicted in FIG. 3A, description 2 can be representative of a command that is associated with Software Application 2. The command can be indicative of a capability of Software Application 2, and the capability may be associated with an action that is performable by Software Application 2 when the command is executed.

In some embodiments, a description may be a string that is unique to a command. In some embodiments, a description may be a set of metadata that is unique to the command. For example, the command can include a unique identifier (UID) associated with an action that is performable by the associated software application. In some examples, the command can include a resource identifier (RID) that is associated with a resource (e.g., data) that is useable by the associated software application in performing the action. The UID and RID may be represented in metadata of the associated description that is provided to and stored in the library 112.

Software applications that include or have access to the library 112 can provide their descriptions to the library 112 such that the library 112 stores the description. In this way, any software application that includes or has access to the library 112 can detect or access any of the descriptions that are stored in the library 112. In some embodiments, descriptions stored in the library 112 may be static descriptions. A static description may be configured to enable a launched and/or executing software application to know of a capability that is provided by another software application that is currently unlaunched and/or not executing. In some embodiments, descriptions stored in the library 112 may be dynamic descriptions. A dynamic description can be configured to enable a launched and/or executing software application to know of a capability of another software application that is launched and/or executing.

As further illustrated in FIG. 3A, Software Application 1 can detect and/or access descriptions 2 through N. In this way, Software Application 1 can know of capabilities provided by any of Software Applications 2 through N, even though Software Applications 2 through N are unlaunched and/or not executing. For example, descriptions 2 through N may be static descriptions stored in the library 112.

Descriptions that are stored in the library 112 can be implemented as library functions that may be called by any launched and/or executing software application that includes or has access to the library 112. For example, a library function associated with a stored description may be an event handler that is configured to cause execution of the command when called by a software application that wishes to invoke the associated capability. Accordingly, a first software application can trigger a functionality of a second software application from outside of the second software application. As depicted in the example of FIG. 3A, Software Application 1 can call a library function of library 112 (e.g., an event handler) associated with any of descriptions 2 through N to invoke the associated capabilities of any of Software Applications 2 through N.

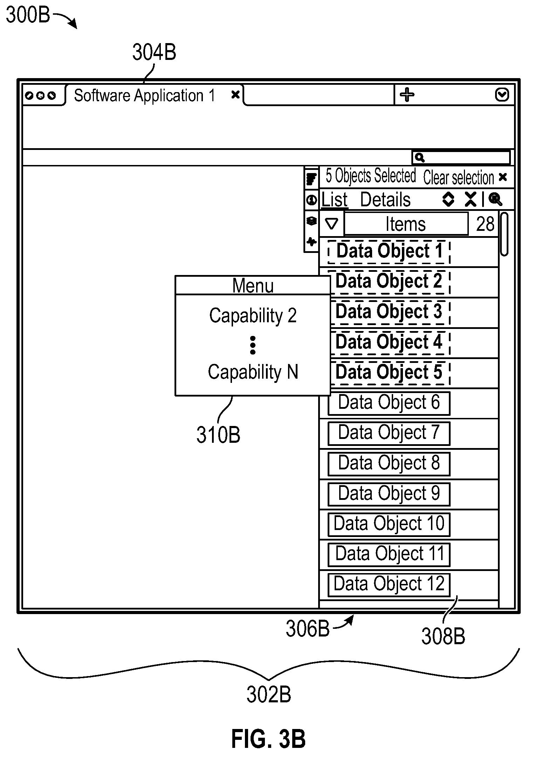

In some embodiments, commands may be surfaced in an interactive graphical user interface (GUI) of a software application that is accessing the library 112. For example, descriptions 2 through N may be surfaced in an interactive GUI of Software Application 1, such as for visualization by a user. A library function associated with a description that is stored in the library 112 can be configured to generate and/or modify user interface data of a software application that is calling the library function. The user interface data may be rendered in the GUI of the software application to generate visual indicia that is indicative of the command that is associated with the description. The visual indicia can include any type of GUI element, including but not limited to, graphical icons, text phrases, menu options, sub-menu options, and the like. GUIs are described in further detail in FIG. 3B.

### Example Graphical User Interfaces and Functionality Related to Detecting Capabilities among Two or More Software Applications

**FIG. 3B** illustrates an example graphical user interface (GUI) 300B of a software application 108 (labeled as "Software Application 1"). The GUI 300B may be an interactive GUI. The GUI 300B may be displayed by a computing device, such as user device 102 (see FIG. 1, for example), which may comprise a computer, laptop, mobile device, tablet, phone, and/or the like. In some embodiments, the GUI 300B can be displayed on the user device 102 as part of an extension or plug-in to a browser where Software Application 1 may be executing. In some embodiments, the GUI 300B may be a native user interface such as a native user interface of Software Application 1. In some embodiments, the GUI 300B can be displayed in a scroll-down menu of a mobile device and/or tablet. The GUI 300B may be any user interface visualized by a user as the user interacts with Software Application 1.

The GUI 300B can receive one or more user inputs. The GUI 300B can facilitate discovery of commands among two or more software applications. In some embodiments, the user device 102 may receive use input via GUI 300B, which may then allow the user device 102 to perform one or more operations based on the user input, such as triggering functionalities associated with two or more other software applications from outside said software applications.

In the example of FIG. 3B, the GUI 300B includes a browser window 302B and a browser tab 304B associated with Software Application 1 that is executing in a browser. However, this is not intended to be limiting. Software Application 1 may execute in any multi-application execution environment, as described elsewhere herein.

The GUI 300B can include, but is not limited to, an object pane 306B and a capabilities field 310B. The object pane 306B can include an object field 308B. The object field 308B can include a menu displaying one or more data objects. For example, a user may visualize a list of data objects via the menu of the object field 308B. The user may interact with the data objects. For example, the user may select or deselect one or more data objects. In the embodiment of FIG. 3B, the user has selected 5 data objects (Data Objects 1 through 5). In some embodiments, in response to the user selecting one or more objects, the user device 102 (e.g., via hardware processor(s) 104) can cause generation and display of the capabilities field 310B. For example, after receiving selection of one or more objects, the user device 102 may generate the capabilities field 310B and cause the capabilities field 310B to be displayed in GUI 300B.

The capabilities field 310B can include a menu displaying one or more visual indicia representative of commands that are associated with other software applications. For example, the user may visualize a plurality of graphical elements associated with a plurality of commands via the menu of the object field 310B. The user may interact with the graphical elements. For example, the user may select or deselect one or more graphical elements. In the example of FIG. 3B, the capabilities field 310B includes text phrases indicative of capabilities 2 through N that are associated with Software Application 2 through N, respectively. The capabilities may be assigned to the text phrases such that selection, by a user, of a text phrase causes the respective command to be executed. In this way, after the user selects a text phrase, the user device 102 can cause execution of the associated command, as further described herein. For example, the user device 102 may cause another software application (e.g., one or more of Software Applications 2 though N) to act on the selected data objects. In some embodiments, in response to receiving a selection of a text phrase, the user device 102 may automatically cause execution of the command without any additional user interaction.

Although the example of FIG. 3B illustrates the capabilities field 310B as displaying text phrases, this is not intended to be limiting. The capabilities field 310B may or may not include text phrases representative of capabilities. Capabilities may be represented by and assigned to any type of graphical element, such as graphical icons and the like. In some embodiments, capabilities may be assigned to keyboard keys, including analog and/or digital keyboard keys. In some embodiments, capabilities may be assigned to a button, including analog and/or digital buttons.

### Example Routines Relating to Detecting Capabilities among Two or More Software Applications

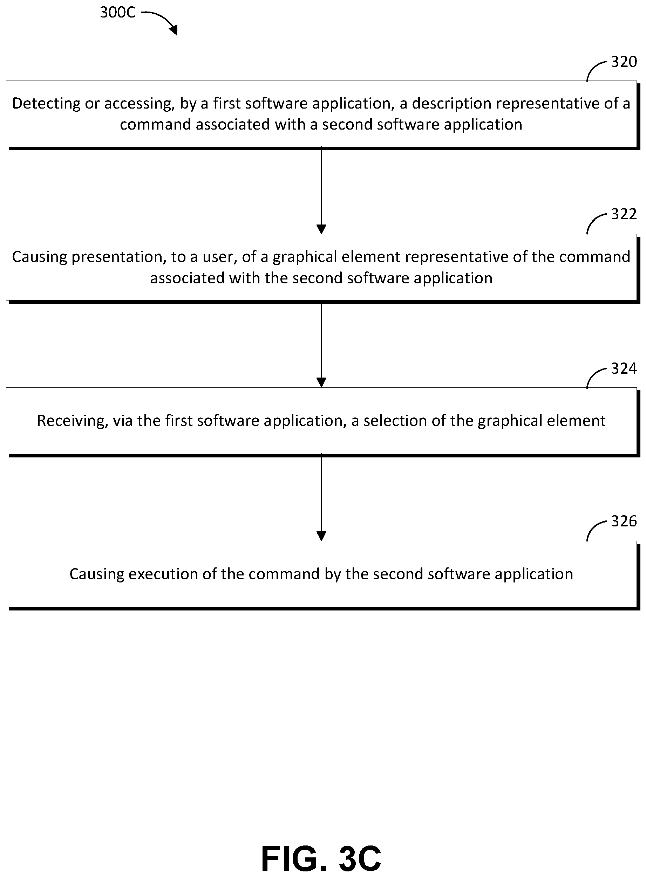

**FIG. 3C** is a diagram illustrating an example routine 300C for discovering commands among two or more software applications (e.g., software application(s) 108). The routine 300C, or portions thereof, can be implemented by a computing device such as user device 102. In some embodiments, the routine 300C, or portions thereof, can be performed by a computing device associated with the user device 102, such as one or more hardware processors 104 described herein.

At block 320, a first software application can detect and/or access a description representative of a command. For example, the first software application can include or have access to a library (e.g., library 112) that stores the description. In some embodiments, the description may be implemented as a function in the library.

The command may be associated with a second software application. The command can be indicative of a capability of the second software application. In some embodiments, the capability may be associated with an action that is performable by the second software application.

In some embodiments, at block 320, the command can include a unique identifier (UID) associated with the action that is performable by the second software application. In some embodiments, the command can include a resource identifier (RID) associated with a resource (e.g., data) that is useable by the second software application in performing the action.

At block 320, in some embodiments, the description can be a static description that is configured to be detectable and/or accessible by the first software application when the second software application is not launched and/or not executing. In this way, the description may be configured to be detectable and/or accessible by the first software application without a user knowing from which software application that associated action originates. In some embodiments, the description can be a dynamic description that is configured to be detectable and/or accessible by the first software application at runtime of the second software application.

At block 322, a processor (e.g., hardware processor(s) 104) can cause presentation, to a user, of a graphical element in an interactive graphical user interface (GUI) of the first software application. For example, the processor may execute a client-side application executable of the first software application that calls a library function associated with the description. The library function can be configured to generate and/or modify user interface data associated with the first software application. The user interface data may be rendered in the GUI of the first software application to generate the graphical element. In some embodiments, at block 322, the processor can cause presentation of the graphical element on a display of the user device.

The graphical element can be representative of the command associated with the second software application. In some embodiments, at block 322, the graphical element can include any type of graphical element, including but not limited to graphical icons, text phrases, menu options, sub-menu options, and the like. The command may be assigned to the graphical element. In this way, selection of the graphical element can cause execution of the command. In some embodiments, the command may be assigned to a keyboard key and/or a button. Accordingly, interacting (e.g., tapping, pressing, and/or the like) with the keyboard key and/or button can cause execution of the command.

At block 324, the first software application can receive a selection of the graphical element. For example, a user may interact with the GUI of the first software application and select the graphical element. The user may select the graphical element using a keyboard key, a cursor (e.g., a point and click mechanism), and/or a body part (e.g., a finger).

At block 326, in response to receiving the selection of the graphical element, the processor may cause the second software application to execute the command. For example, the processor may execute a client-side application executable of the first software application to call a library function associated with the command. In some embodiments, the library function can include or be implemented as an event handler that is configured to cause one or more operations to be performed for executing the command. In this way, the processor can execute client-side code associated with the event handler to cause execution of the command.

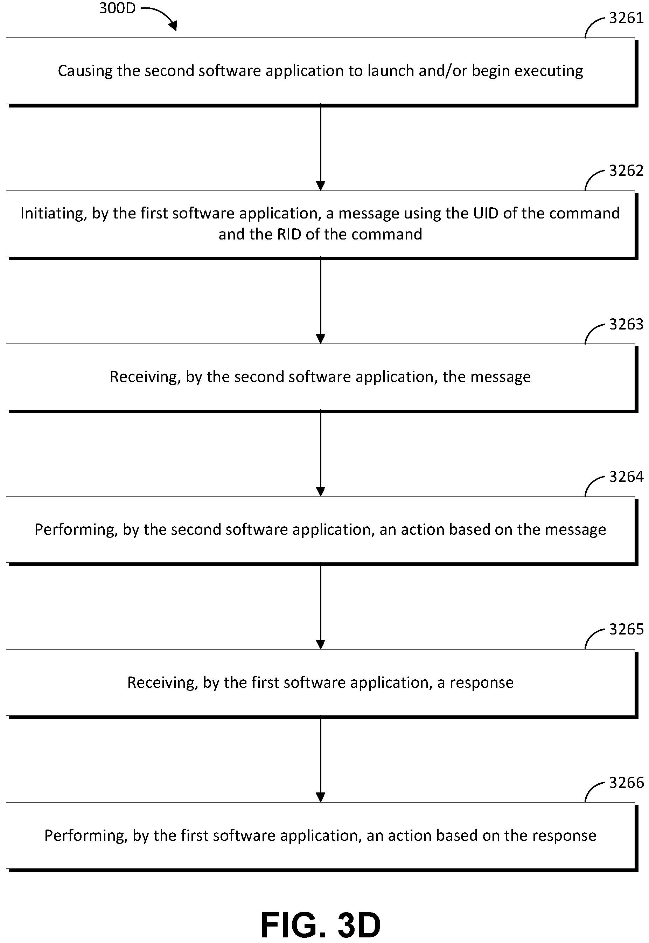

**FIG. 3D** is a flow diagram illustrating an example routine 300D for discovering commands among two or more software applications (e.g., software application(s) 108). The routine 300D, or portions thereof, can be implemented by a computing device such as user device 102. In some embodiments, the routine 300D, or portions thereof, can be performed by a computing device associated with the user device 102, such as one or more hardware processors 104 described herein.

Although multiple blocks are illustrated in FIG. 3D, not all blocks may necessarily be performed in the ordinary course when performing routines associated with detecting commands among two or more software applications. Moreover, although blocks depicted in FIG. 3D are illustrated in a particular order, this is not intended to be limiting. One or more blocks illustrated in FIG. 3D may be performed in one or more different orders, may be performed simultaneously, may be combined into fewer blocks, may be separated into additional blocks, or may not be performed at all.

At block 3261, the processor can cause the second software application to launch and/or begin executing. In some embodiments, the processor may cause the second software application to launch and/or begin executing in response to receiving the selection of the graphical element. For example, the processor can execute client-side code of the second software application that causes the second software application to launch and/or begin executing. In some embodiments, at block 3261, the processor may automatically cause the second software application to launch and/or begin executing without additional user interaction. Prior to executing the command, the second software application may be unlaunched and/or not executing.

At block 3262, the first software application can initiate a message using the UID and RID of the command. The first software application can include an event emitter configured to initiate messages, such as messages for invoking functionality in another software application (e.g., the second software application). The event emitter can include one or more features and/or functions similar or identical to any of those of event emitters shown and/or described with reference to FIGS. 2A-2E. The event emitter may be initialized via one or more specifications (e.g., specification(s) 110) and used by the first software application to consume and implement any of the discovery and/or messaging protocols described herein. For example, the event emitter can be implemented (e.g., in software) as part of a front-end client API of the specification(s) or within the library. In this way, client-side executable code associated with the event emitter may be bundled within a client-side application executable of the first software application, or may be included in the library, such as a library function.

In some embodiments, at block 3262, the processor can execute the client-side code associated with the event emitter to initiate the message.

At block 3262, the message can include a message type that is associated with the UID of the command. The message can include metadata representative of the message type. In some embodiments, the message type can be a string. In some embodiments, the message type can be a set of metadata. The message type can be configured to enable the second software application to know what the message is. For example, based on the message type, the second software application can know which action to perform in relation to the executed command. In some embodiments, the message can include a message payload that is associated with the RID of the command. The message can include metadata representative of the payload. The message payload can include data that is useable by the second software application in performing the action.

At block 3262, the message can include a target ID associated with the second software application. For example, the message can include metadata representative of the target ID. The target ID may be a unique identifier for the second software application. The target ID can be a string that is unique to the second software application. In some embodiments, the target ID can be a set of metadata that is unique to the second software application. The target ID can be configured to enable the first software application to target the second software application for messaging. For example, the target ID can be configured to enable the first software application to target second software application so as to invoke a functionality in the second software application.

At block 3263, the second software application can detect and/or receive the message. The second software application can include an event listener configured to detect and/or receive messages, such as message for invoking functionality in the second software application. The event listener can include one or more features and/or functions similar or identical to any of those of event listeners shown and/or described with reference to FIGS. 2A-2E. The event listener may be initialized via the specification(s) and used by the second software application to consume and implement any of the discovery and/or messaging protocols described herein. For example, the event listener can be implemented (e.g., in software) as part of a front-end client API of the specification(s) or within the library. In this way, client-side executable code associated with the event listener may be bundled within a client-side application executable of the second software application, or may be included in the library, such as a library function.

**In** some embodiments, at block 3263, the processor can execute the client-side code associated with the event listener to detect and/or receive the message.

At block 3264, the second software application can perform the action based on the received message. The second software application can include an event handler configured to process detected and/or received messages, such as messages for invoking functionality in the second software application. In some embodiments, the event handler can be configured to cause the second software application to perform an operation based on the detected and/or received message. The event handler can include one or more features and/or functions similar or identical to any of those of event handler shown and/or described with reference to FIGS. 2A-2E. The event handler may be initialized via the specification(s) and used by the second software application to consume and implement any of the discovery and/or messaging protocols described herein. For example, the event handler can be implemented (e.g., in software) as part of a front-end client API of the specification(s) or within the library. In this way, client-side executable code associated with the event handler may be bundled within a client-side application executable of the second software application, or may be included in the library, such as a library function.

In some embodiments, at block 3264, the processor can execute client-side code associated with the event handler to process the detected and/or received message. In some embodiments, the processor may parse the data associated with the message and determine (e.g., based on the message type) that the second software application is to perform the action related to the command. In this way, the processor can execute client-side code of the second software application to perform that action. The processor may perform the action on the data (and/or perform the action using the data) included in the message payload.

At block 3265, in some embodiments, the first software application may detect and/or receive a response from the second software application upon the second software application completing the action, such as described hereinabove. For example, the second software application may (e.g., automatically) initiate a response (also referred to as a "message," such as described herein) indicative of the completed action once said action is complete. In some embodiments, the response may be a callback. In some embodiments, the response may be a request. In this way, the second software application can include an event emitter (such as shown and/or described in FIGS. 2A-2E) configured to initiate responses upon completion of actions invoked by the first software application. Accordingly, the processor can execute client-side code associated with the event emitter of the second software application to initiate the response.

The response may include a target ID and a source ID, such as described herein. The target ID may be associated with the first software application such that the second software application can target the first software application for messaging. The source ID may be associated with the second software application such that the first software application knows that the response originated from the second software application. In some embodiments, the response may include a payload indicative of the completed action. For example, the payload can include JSON data representative of the completed action. In some embodiments, the response may include a UID and/or RID associated with a subsequent command to invoke an action in the first software application. For example, the payload can include data useable by the first software application in performing the action.

The first software application can include an event listener (such as shown and/or described in FIGS. 2A-2E) configured to detect and/or receive responses, such as may be initiated upon completion of an invoked action. The processor may execute client-side code associated with the event listener of the first software application to detect and/or receive the response.

At block 3266, in some embodiments, the first software application may perform an action based on the response. The first software application can include an event handler (such as shown and/or described in FIGS. 2A-2E) configured to process responses that may be initiated upon completion of an invoked action. The processor may execute client-side code associated with the event handler of the first software application to process the response. For example, the processor may parse the payload included in the response and determine that the second software application has completed the action and/or determine that the first software application is to perform a subsequent action.

In some embodiments, the event handler of the first software application may be further configured to cause one or more operations to be performed based on the processed response. For example, in response to processing the response, the processor may execute client-side code associated with the event handler to generate and/or modify user interface data, such as user interface data of the first software application, based on processed messages. The user interface data may be rendered in a graphical user interface (GUI) of the first software application to generate visual indicia, such as any of the graphical elements described herein. The visual indicia can be representative of the completed action. For example, the visual indicia may include one or more notifications, alerts, and/or the like for visualization by a user. In some embodiments, the processor may cause presentation of the notification, alert, and/or the like on a display of a user device.

In some examples, the processor may parse the data associated with the response and determine (e.g., based on the message type) that the first software application is to perform an action on and/or using the data included in the response payload. For example, the processor may execute a client-side application executable of the first software application to perform an action on the data and/or perform an action using the data included in the payload.

In some examples, in response to processing the response, the processor may execute client-side code associated with the event handler of the first software application to initiate another command to invoke the same action (e.g., the same action but on different data) and/or a new action (e.g., a different action on the same or different data) in the second software application or other software application, such as describe herein. For example, the processor may execute client-side code associated with the event emitter to initiate a new message having a UID, RID, and/or payload associated with another command.

### Example Features and Functionality Related to Sharing States among Two or More Software Applications

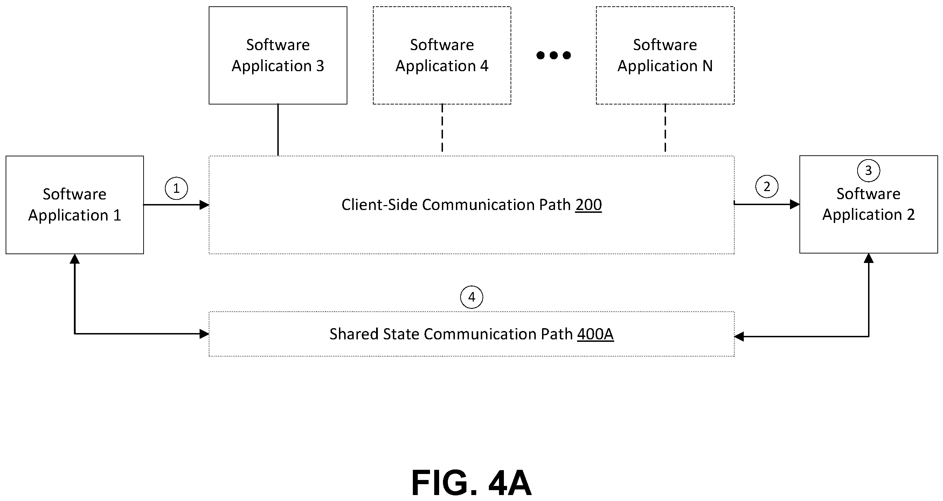

**FIG. 4A** is a block diagram illustrating an example set of client-side interactions associated with sharing states among two or more software applications (e.g., software applications 108) of a user device, such as user device 102 described herein (see FIG. 1, for example). FIG. 4A includes a set of circles 1-4 that illustrate said interactions. In some embodiments, the interactions may be ordered differently and/or include more or fewer interactions.

A number N of software applications 108 are stored on the user device 102 (e.g., in the memory 106). Software applications that are launched, executing, open, and/or active can initialize or join the client-side communication path 200, such as described herein (see FIG. 2A, for example). In some embodiments, one or more software applications 108 may initialize and/or join the client-side communication path 200 via a call to a BroadcastChannel API. In the example of FIG. 4A, software applications 108 labeled "Software Application 1," "Software Application 2," and "Software Application 3" have initialized and/or joined the client-side communication path 200. In this way, Software Applications 1, 2, and 3 can send and receive messages via the client-side communication path 200. Software applications 108 labeled as "Software Application 4" through "Software Application N" are stored on the user device 102, but are not joined to the client-side communication path 200. Accordingly, Software Applications 4 through N cannot send or receive messages via the client-side communication path 200.

Beginning at interaction 1, Software Application 1 broadcasts an advertisement message using the specification(s) 110 via the client-side communication path 200. Software Application 1 can initiate a call to a front-end client API (either directly in code or via calling a function of library 112) associated with the specification(s) 110 that is configured for implementing any of the discovery protocols described herein. In some embodiments, Software Application 1 can include an event emitter configured to initiate advertisement messages. The event emitter may be implemented as part of the front-end client API of specification(s) 110 or within library 112. For example, client-side executable code associated with the event emitter may be bundled within a client-side application executable of Software Application 1, or may be included in the library 112, such as a library function.

At interaction 1, one or more hardware processors 104 may execute a client-side application executable of Software Application 1 that directly initiates (e.g., constructs and/or sends) the API call or that calls a library function (e.g., via library 112) to initiate the advertisement message. In some embodiments, the one or more hardware processors 104 can execute the client-side code associated with the event emitter to initiate the advertisement message.

The advertisement message can include metadata representative of at least a scope identifier (ID) associated with Software Application 1. The scope ID can be a unique identifier for Software Application 1. The scope ID can be a string that is unique Software Application 1. In some embodiments, the scope ID can be a string that is unique to Software Application 1. In some embodiments, the scope ID can be a set of metadata that is unique to Software Application 1. The scope ID can be configured to enable other listening software applications to "see" the client-side state of Software Application 1. For example, all software applications that have the same scope may see each other's client-side states.

Software Application 1 may initiate an advertisement message at any time during its runtime. In some embodiments, Software Application 1 may initiate an advertisement message after (or upon) initializing and/or joining the client-side communication path 200. Software Application 1 can broadcast its advertisement message throughout its runtime (e.g., until Software Application 1 terminates, crashes, and/or the like). For example, Software Application 1 may implement a heartbeat function and periodically broadcast its advertisement message during runtime, such as during discrete periods of time. In some examples, Software Application 1 may broadcast its advertisement message every 30 seconds during runtime. However, this is not intended to be limiting. Software Application 1 may broadcast its advertisement message during any interval of time.

The advertisement message can be configured to let other listening software application(s) 108 know that the advertising software application is able to share state. In the example of FIG. 4A, the advertisement message originating from Software Application 1 is configured to let Software Applications 2 and/or 3 know that Software Application 1 is available for sharing state.

Advertisement messages broadcast via the client-side communication path 200 can be detected and/or received by listening software applications, such as Software Applications 2 and/or 3. At interaction 2, Software Application 2 detects the advertisement message originating from Software Application 1. Similar to Software Application 1, Software Application 2 can be associated with its own scope ID. The scope ID can be a unique identifier for Software Application 2. The scope ID can be a string that is unique to Software Application 2. In some embodiments, the scope ID can be a set of metadata that is unique to Software Application 2.

Software Application 2 can initiate a call to a front-end client API (either directly in code or via calling a function of library 112) associated with the specification(s) 110 that is configured for implementing any of the discovery protocols described herein. In some embodiments, Software Application 2 can include an event listener configured to detect advertisement messages. The event listener may be implemented as part of the front-end client API of specification(s) 110 or within library 112. For example, client-side executable code associated with the event listener may be bundled within a client-side application executable of Software Application 2, or may be included in the library 112, such as a library function.

At interaction 2, one or more hardware processors 104 may execute a client-side application executable of Software Application 2 that directly initiates the API call or that calls a library function (e.g., via library 112) to detect the advertisement message. In some embodiments, the one or more hardware processors 104 can execute the client-side code associated with the event listener to detect the advertisement message.

In some embodiments, Software Application 3 detects the advertisement message originating from Software Application 1. However, Software Applications 4 through N, which are not joined with the client-side communication path 200, cannot detect the advertisement message.

At interaction 3, Software Application 2 processes the advertisement message. Software Application 2 can include an event handler configured to direct how Software Application 2 responds to detected and/or received advertisement messages. For example, the event handler may be configured to process detected and/or received advertisement messages and/or to cause Software Application 2 to perform an operation based on detected and/or received advertisement messages. The event handler may be implemented as part of the front-end client API of specification(s) 110 or within library 112. For example, client-side executable code associated with the event handler may be bundled within a client-side application executable of Software Application 2, or may be included in the library 112, such as a library function.

At interaction 3, one or more hardware processors 104 may execute a client-side application executable of Software Application 2 that directly initiates the API call or that calls a library function (e.g., via library 112) to process the advertisement message. In some embodiments, the one or more hardware processors 104 can execute the client-side code associated with the event listener to process the advertisement message. For example, the hardware processor(s) 104 may parse the metadata included in the advertisement message to detect the scope ID associated with Software Application 1.

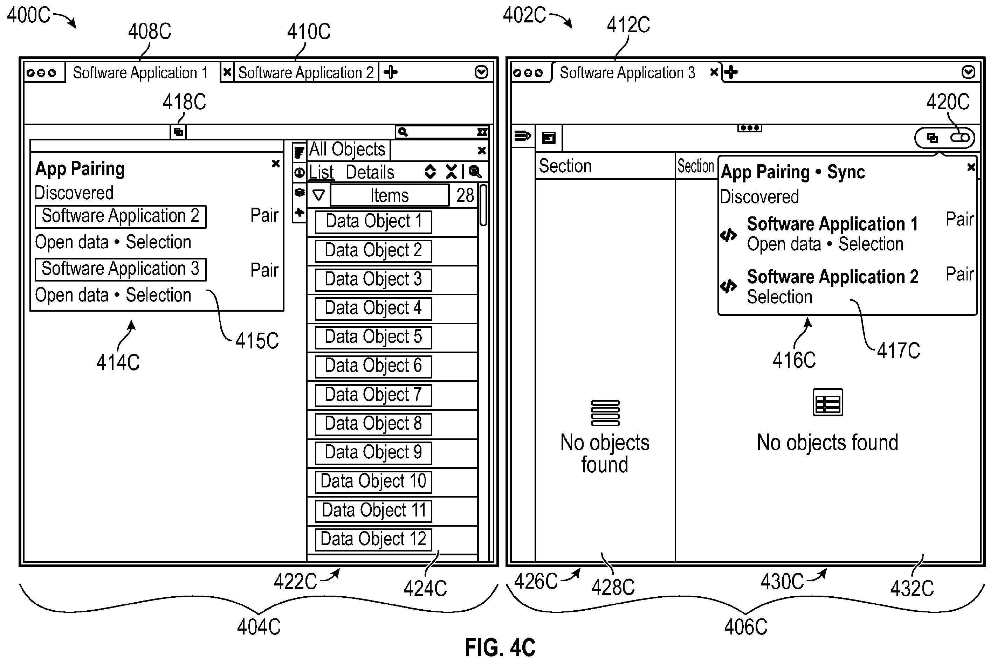

At interaction 3, a graphical element representative of Software Application 1 may be surfaced in an interactive GUI of Software Application 2. For example, the event handler of Software Application 2 can be configured to generate and/or modify user interface data, such user interface data of Software Application 2. The user interface data may be rendered in the GUI of Software Application 2 to generate visual indicia that is indicative of Software Application 1. The visual indicia can include any type of graphical element, including but not limited to, graphical icons, text phrases, menu options, sub-menu options, and the like. GUIs are described in further detail in FIGS. 4C-4E.

At interaction 4, the scope IDs of either or both of Software Applications 1 or 2 update such that the scope IDs match. In this way, Software Applications 1 and 2 initialize and/or join a shared state communication path 400A. The shared state communication path 400A can be any available wire technology (e.g., method, protocol, or mechanism) configured to establish and manage communication between software components, software applications, and/or software systems. The shared state communication path 400A can be a client-side communication path that is configured to enable software applications that have initialized and/or joined the shared state communication path 400A to send and/or receive state messages. As depicted in FIG. 4A, Software Applications 1 and 2, which have initialized and/or joined the shared state communication path 400A, can send and/or receive state messages to and/or from each other.

The shared state communication path 400A can be isolated from any other software applications that haven't initialized or joined the shared state communication path 400A. For example, as illustrated in FIG. 4A, Software Application 3, which has initialized and/or joined client-side communication path 200, has not initialized and/or joined shared state communication path 400A. In this way, Software Application 3 cannot send and/or receive state messages to and/or from either of Software Applications 1 or 2.

In some embodiments, one or more software applications 108 may initialize and/or join the shared state communication path 400A via a call to a front-end client BroadcastChannel API using a scope ID included in a detected advertisement message. For example, at interaction 4, Software Applications 1 and 2 may initialize and/or join the shared state communication path 400A via calling the BroadcastChannel API using the scope ID associated with Software Application 1. In some examples, Software Applications 1 and 2 may initialize and/or join the shared state communication path 400A via calling the BroadcastChannel API using the scope ID associated with Software Application 2.

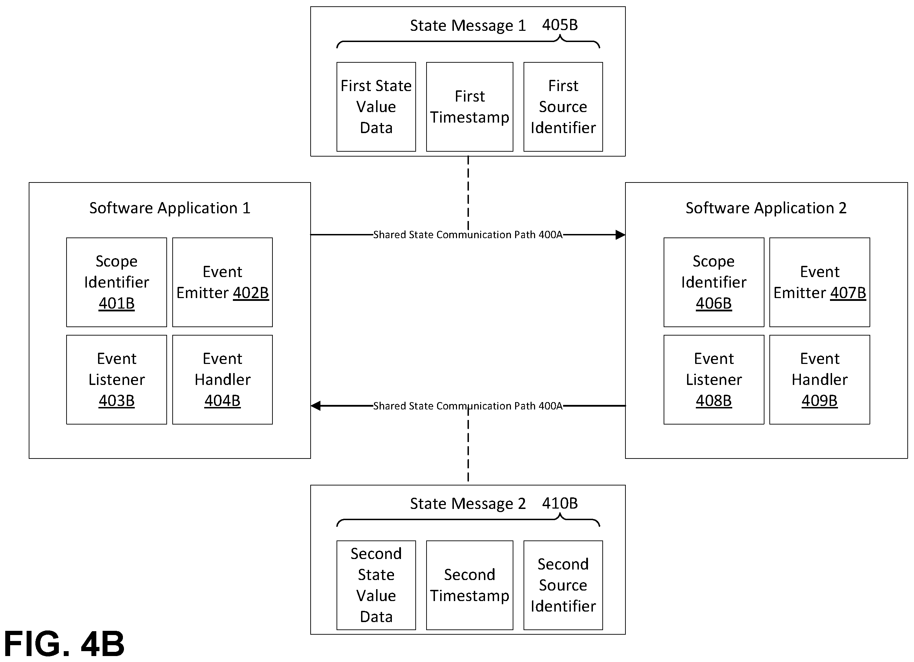

After (or upon) initializing and/or joining the share state communication path 400A, Software Applications 1 and/or 2 can initiate and/or receive state messages to synchronize their client-side states with each other, such as further described herein (see FIG. 4B, for example). State messages can include one or more properties configured to enable Software Applications 1 and/or 2 to share their client-side states with each other. For example, state messages can include metadata representative of at least GUI elements, application data, and user input, as further described herein.

**FIG. 4B** is a block diagram illustrating data that may be exchanged for sharing states among two or more software applications 108. As illustrated in FIG. 4B, two software applications stored on a user device 102 (e.g., in the memory 106) and loaded with (or having access to) the specification(s) 110 and/or the library 112 are labeled as "Software Application 1" and "Software Application 2." Software Applications 1 and 2 have initialized and/or joined a share state communication path 400A, such as shown and/or described with reference to FIG. 4A. At least one of Software Applications 1 or 2 has updated their scope ID to match that of Software Applications 2 or 1, respectively (e.g., via advertisement messages implemented via any of the discovery protocols described herein). Software Applications 1 and 2 can send and receive state messages (labeled as "State Message 1" and "State Message 2") to and from one another.

Software Application 1 can include, but is not limited to, a Scope ID 401B, an event emitter 402B, an event listener 403B, and an event handler 404B. As described herein, the scope ID 401B can be a unique identifier for Software Application 1. The scope ID 401B can be a string that is unique to Software Application 1. In some embodiments, the scope ID 401B can include a set of metadata that is unique to Software Application 1. The scope ID 401B can be configured to enable other software application(s) 108, such as Software Application 2, to see the client-side state of Software Application 1.

The event emitter 402B can be any component, function, or process capable of generating messaging events, such as described herein. In some embodiments, the event emitter 402B can include one or more features and/or functions similar or identical to any of those of event emitter 202 and/or 207, such as shown and/or described with reference to FIG. 2B. The event emitter 402B can be implemented (e.g., in software) as part of a front-end client API of specification(s) 110 or within the library 112. For example, client-side executable code associated with event emitter 402B may be bundled within a client-side application executable of Software Application 1. In some examples, client-side executable code associated with event emitter 402B may be included in the library 112, such as a library function.

The event emitter 402B can be configured to initiate messages for sharing states among two or more software application(s) 108, such as among Software Applications 1 and 2. In this way, one or more hardware processors 104 of the user device 102 can execute client-side executable code associated with the event emitter 402B to initiate a state message. For example, the one or more hardware processors 104 may directly execute a client-side event emitter executable, or call a related library function, to initiate a state message. In the example of FIG. 4B, the event emitter 402B initiates State Message 1.

The event listener 403B can be any component, function, or process capable of detecting messaging events. In some embodiments, the event listener 403B can include one or more features and/or functions similar or identical to any of those of event listener 203 and/or 208, such as shown and/or described with reference to FIG. 2B. The event listener 403B can be implemented (e.g., in software) as part of a front-end client API of specification(s) 110 or within the library 112. For example, client-side executable code associated with event listener 403B may be bundled within a client-side application executable of Software Application 1. In some examples, client-side executable code associated with event listener 403B may be included in the library 112, such as a library function.

The event listener 403B can be configured to detect state messages originating from other software applications that are paired with the software application that is registered with the event listener 403B. For example, the event listener 403B can be configured to detect state messages originating from software applications that are scoped to Software Application 1, such as State Message 2. In this way, one or more hardware processors 104 of the user device 102 can execute client-side executable code associated with the event listener 403B to detect a state message. For example, the one or more hardware processors 104 may directly execute a client-side event listener executable, or call a related library function, to detect any state messages originating from a software application that is paired with Software Application 1. In the example of FIG. 4B, the event listener 403B detects State Message 2.

The event handler 404B can be any component, function, or process capable of processing messaging events. In some embodiments, the event handler 404B can include one or more features and/or functions similar or identical to any of those of event handler 204 and/or 209, such as shown and/or described with reference to FIG. 2B. The event handler 404B can be implemented (e.g., in software) as part of a front-end client API of specification(s) 110 or within the library 112. For example, client-side executable code associated with event handler 404B may be bundled within a client-side application executable of Software Application 1. In some examples, client-side executable code associated with event handler 404B may be included in the library 112, such as a library function.

The event handler 404B can be configured to direct how a receiving software application responds to state messages. For example, the event handler 404B can be configured to direct how Software Application 1 responds to State Message 2. In this way, one or more hardware processors 104 of the user device 102 can execute client-side executable code associated with the event handler 404B to process detected and/or received state messages, and/or initiate an operation based on said messages. For example, the one or more hardware processors 104 may directly execute a client-side event handler executable, or call a related library function, to process a state message and/or initiate an operation based on the state message. In the example of FIG. 4B, the event handler 404B processes State Message 2. In some embodiments, the event handler 404B may cause Software Application 1 to perform an operation based on State Message 2. For example, Software Application 1 may update its client-side state to match that of Software Application 2.

Software Application 2 can include, but is not limited to, a Scope ID 406B, an event emitter 407B, an event listener 408B, and an event handler 409B. As described herein, the scope ID 406B can be a unique identifier for Software Application 2. The scope ID 406B can be a string that is unique to Software Application 2. In some embodiments, the scope ID 406B can include a set of metadata that is unique to Software Application 2. The scope ID 406B can be configured to enable other software application(s) 108, such as Software Application 1, to see the client-side state of Software Application 2.

The event emitter 407B can be any component, function, or process capable of generating messaging events, such as described herein. In some embodiments, the event emitter 407B can include one or more features and/or functions similar or identical to any of those of event emitter 202 and/or 207, such as shown and/or described with reference to FIG. 2B. The event emitter 407B can be implemented (e.g., in software) as part of a front-end client API of specification(s) 110 or within the library 112. For example, client-side executable code associated with event emitter 407B may be bundled within a client-side application executable of Software Application 2. In some examples, client-side executable code associated with event emitter 407B may be included in the library 112, such as a library function.

The event emitter 407B can be configured to initiate messages for sharing states among two or more software application(s) 108, such as among Software Applications 1 and 2. In this way, one or more hardware processors 104 of the user device 102 can execute client-side executable code associated with the event emitter 407B to initiate a state message. For example, the one or more hardware processors 104 may directly execute a client-side event emitter executable, or call a related library function, to initiate a state message. In the example of FIG. 4B, the event emitter 407B initiates State Message 2.

The event listener 408B can be any component, function, or process capable of detecting messaging events. In some embodiments, the event listener 408B can include one or more features and/or functions similar or identical to any of those of event listener 203 and/or 208, such as shown and/or described with reference to FIG. 2B. The event listener 408B can be implemented (e.g., in software) as part of a front-end client API of specification(s) 110 or within the library 112. For example, client-side executable code associated with event listener 408B may be bundled within a client-side application executable of Software Application 2. In some examples, client-side executable code associated with event listener 408B may be included in the library 112, such as a library function.

The event listener 408B can be configured to detect state messages originating from other software applications that are paired with the software application that is registered with the event listener 408B. For example, the event listener 408B can be configured to detect state messages originating from software applications that are scoped to Software Application 2, such as State Message 1. In this way, one or more hardware processors 104 of the user device 102 can execute client-side executable code associated with the event listener 408B to detect a state message. For example, the one or more hardware processors 104 may directly execute a client-side event listener executable, or call a related library function, to detect any state messages originating from a software application that is paired with Software Application 2. In the example of FIG. 4B, the event listener 403B detects State Message 2.

The event handler 409B can be any component, function, or process capable of processing messaging events. In some embodiments, the event handler 404B can include one or more features and/or functions similar or identical to any of those of event handler 204 and/or 209, such as shown and/or described with reference to FIG. 2B. The event handler 409B can be implemented (e.g., in software) as part of a front-end client API of specification(s) 110 or within the library 112. For example, client-side executable code associated with event handler 404B may be bundled within a client-side application executable of Software Application 2. In some examples, client-side executable code associated with event handler 409B may be included in the library 112, such as a library function.

The event handler 409B can be configured to direct how a receiving software application responds to state messages. For example, the event handler 409B can be configured to direct how Software Application 2 responds to State Message 1. In this way, one or more hardware processors 104 of the user device 102 can execute client-side executable code associated with the event handler 404B to process detected and/or received state messages, and/or initiate an operation based on said messages. For example, the one or more hardware processors 104 may directly execute a client-side event handler executable, or call a related library function, to process a state message and/or initiate an operation based on the state message. In the example of FIG. 4B, the event handler 409B processes State Message 1. In some embodiments, the event handler 409B may cause Software Application 2 to perform an operation based on State Message 2. For example, Software Application 2 may update its client-side state to match that of Software Application 1.

As further depicted in FIG. 4B, Software Applications 1 and 2 initiate State Messages 1 and 2, respectively. Software Applications 1 and/or 2 can initiate state messages after (or upon) pairing with one another, such as after (or upon) initializing and/or joining shared state communication path 400A. In some embodiments, paired Software Applications 1 and/or 2 can initiate state messages any time there is an update to a client-side state of either software application.

State Messages 1 and 2 can include one or more properties 405B, 410B configured to enable state sharing among paired Software Applications 1 and 2. For example, properties 405B, 410B can be configured to enable paired Software Applications 1 and/or 2 to synchronize their initial client-side states. In some examples, properties 405B, 410B can be configured to enable paired Software Applications 1 and/or 2 synchronize any updates to their respective client-side states.

In the example of FIG. 4B, properties 405B can include first state value data, a first timestamp, a first source ID, and associated metadata. In some embodiments, properties 405B can include metadata representative of the first timestamp and the first source identifier (ID).

First state value data can be representative of a first state value associated with a client-side state of Software Application 1. The first state value can be a variable that represents any part of the current condition, configuration, and/or status of Software Application 1. The first state value may be dynamic and change in response to user interaction or other runtime events.

In some embodiments, the first state value may be representative of the GUI of Software Application 1. For example, the first state value may be representative of various GUI elements of Software Application 1, including but not limited to: graphical elements (e.g., icons, images, and/or the like); textual elements (e.g., text phrases); interactive input elements (e.g., buttons, forms/inputs, switches, search bars, and/or the like); navigational elements (e.g., menus, links, tabs, sidebars, pagination controls, and/or the like); information display elements (e.g., alerts/notifications, modal dialogues, tooltips, badges, progress bars, cards, charts/graphs, and/or the like); containers and layout elements (e.g., sections, grids, panels, frames, accordions, and/or the like); media controls (e.g., play/pause controls, volume controls, progress scrubbers, and/or the like); state indicators (e.g., loaders, spinners, and/or the like), aesthetic elements (e.g., animations, effects, transitions, shadows/borders, and/or the like); and the like. In some embodiments, the first state value may be representative of the positions, text content, and/or selection of various GUI elements. In this way, the first state value may be configured to manage and/or update GUI element visibility, display, styling and/or appearance, behavior, navigation, and the like.

In some embodiments, the first state value may be representative of various application data of Software Application 1, such as dynamic lists and data (e.g., data objects), user preferences, configuration settings, filters, and the like. In some embodiments, the first state value may be representative of user interactions with Software Application 1, such as scroll position, cursor position, keypresses, clicks, taps, inputted values, selected objects, and the like.

The first source ID can include one or more features and/or functions similar or identical to any of those of source IDs shown and/or described with reference to FIG. 2B. For example, the first source ID can be a unique identifier (e.g., a unique string, a unique set of metadata) for Software Application 1. The first source ID can be configured to enable paired software applications to know from which software application a state message originates. In some embodiments, the first source ID may be configured to enable paired software applications to determine whether to update their client-side states, such as by using a string-compare function based at least in part on the first source ID, as further described herein.

The first timestamp can be representative of a time at which State Message 1 is initiated by Software Application 1. In some embodiments, the first timestamp can be representative of a time at which the client-side state of Software Application 1 exists. For example, the first timestamp can be indicative of a time at which the client-side state of Software Application 1 was modified, such as in response to user interaction or runtime events. The first timestamp can be configured to enable paired software applications to know when State Message 1 was initiated. In some embodiments, the first timestamp may be configured to enable paired software applications to determine whether to update their client-side states, such as based at least in part on a comparison between timestamps, as further described herein.

As further depicted in FIG. 4B, properties 410B can include second state value data, a second timestamp, a second source ID, and associated metadata. In some embodiments, properties 410B can include metadata representative of the second timestamp and the second source identifier (ID).

Second state value data can be representative of a second state value associated with a client-side state of Software Application 2. The second state value can be a variable that represents any part of the current condition, configuration, and/or status of Software Application 2. The second state value may be dynamic and change in response to user interaction or other runtime events.

In some embodiments, the second state value may be representative of the GUI of Software Application 2. For example, the second state value may be representative of various GUI elements of Software Application 2, including but not limited to: graphical elements; textual elements; interactive input elements; navigational elements; information display elements; containers and layout elements; media controls; state indicators, aesthetic elements; and the like. In some embodiments, the second state value may be representative of the positions, text content, and/or selection of various GUI elements. In this way, the second state value may be configured to manage and/or update GUI element visibility, display, styling and/or appearance, behavior, navigation, and the like.

In some embodiments, the second state value may be representative of various application data of Software Application 2, such as dynamic lists and data (e.g., data objects), user preferences, configuration settings, filters, and the like. In some embodiments, the second state value may be representative of user interactions with Software Application 2, such as scroll position, cursor position, keypresses, clicks, taps, inputted values, selected objects, and the like.

The second source ID can include one or more features and/or functions similar or identical to any of those of source IDs shown and/or described with reference to FIG. 2B. For example, the second source ID can be a unique identifier (e.g., a unique string, a unique set of metadata) for Software Application 2. The second source ID can be configured to enable paired software applications to know from which software application a state message originates. In some embodiments, the second source ID may be configured to enable paired software applications to determine whether to update their client-side states, such as by using a string-compare function based at least in part on the second source ID, as further described herein.

The second timestamp can be representative of a time at which State Message 2 is initiated by Software Application 2. In some embodiments, the second timestamp can be representative of a time at which the client-side state of Software Application 2 exists. For example, the second timestamp can be indicative of a time at which the client-side state of Software Application 2 was modified, such as in response to user interaction or runtime events. The second timestamp can be configured to enable paired software applications to know when State Message 2 was initiated. In some embodiments, the second timestamp may be configured to enable paired software applications to determine whether to update their client-side states, such as based at least in part on a comparison between timestamps, as further described herein.

### Example Graphical User Interfaces and Functionality Related to Sharing State among Two or More Software Applications

**FIG. 4C** illustrates an example graphical user interface (GUI) 400C of a software application 108 (labeled as "Software Application 1"). The GUI 400C may be an interactive GUI. The GUI 400C may be displayed by a computing device, such as user device 102 (see FIG. 1, for example), which may comprise a computer, laptop, mobile device, tablet, phone, and/or the like. In some embodiments, the GUI 400C can be displayed on the user device 102 as part of an extension or plug-in to a browser where Software Application 1 may be executing. In some embodiments, the GUI 400C may be a native user interface such as a native user interface of Software Application 1. In some embodiments, the GUI 400C can be displayed in a scroll-down menu of a mobile device and/or tablet. The GUI 400C may be any user interface visualized by a user as the user interacts with Software Application 1.

The GUI 400C can receive one or more use inputs. The GUI 400C can facilitate pairing of two or more software applications. In some embodiments, the user device 102 may receive user input via GUI 400C, which may then allow the user device 102 to perform one or more operations based on the user input, such as sharing states among two or more software applications. In this way, the GUI 400C includes controls to pair and/or unpair two or more software applications.

In the example of FIG. 4C, GUI 400C includes a browser window 404C and browser tabs 408C, 410C associated with Software Applications 1 and 2 that are executing in a browser. However, this is not intended to be limiting. Software Applications 1 and 2 may execute in any multi-application execution environment, as described elsewhere herein.

The GUI 400C can include, but is not limited to, a pairing pane 414C, a pairing icon 418C, and an object pane 422C. The pairing pane 414C can include a pairing field 415C. The pairing field 415C can include a menu for displaying indicia representative of one or more software applications that are launched, executing, open, and/or active. For example, a user may visualize a list of pairable software applications via the menu of the pairing field 415C. The user may interact with the visual indicia. For example, a user may select to pair or unpair one or more software applications. In the embodiment of FIG. 4C, the user has not selected any software application for pairing with Software Application 1.

The pairing icon 418C can be configured to indicate to a user that a software application (e.g., Software Application 1) is paired with another software application. In this way, the pairing icon 418C can be configured to dynamically change responsive to whether the state of Software Application 1 is shared with another software application. For example, the pairing icon 418C can change its appearance (e.g., shape, color, orientation, pattern, and/or the like) and/or location to indicate to the user that Software Application 1 is either unpaired or paired. The user device 102 (e.g., via one or more hardware processors 104) can cause the pairing icon 418C to change in response to user initiation of pairing Software Application 1 with another software application. The user device 102 can cause continuous and/or persistent display of the pairing icon 418C in the GUI 400C. For example, the user device 102 may cause display of the changed pairing icon 418C for visualization by the user for the entire duration that Software Application 1 is paired with another software application. After (or upon) termination of pairing, the user device 102 can cause the pairing icon 418C to revert to its original appearance to indicate that Software Application 1 is no longer paired with another software application. In the example of FIG. 4B, the pairing icon 418C indicates to the user that Software Application 1 is unpaired.

The pairing icon 418C of the GUI 400C is not intended to be limiting. In some embodiments, the GUI 400C can include multiple different icons for indicating when Software Application 1 is paired or unpaired. In some embodiments, the user device 102 can cause generation and output of an alert and/or notification, such as in response to user initiation of pairing Software Application 1 with another software application. For example, after selecting a software application for pairing with Software Application 1, the user device 102 may generate an alert and/or notification and output the alert and/or notification in the GUI 400C. The user device 102 can cause continuous and/or persistent display of the alert and/or notification in the GUI 400C, such as for the entire duration that Software Application 1 is paired with another software application. The alert and/or notification may or may not include text phrases. After (or upon) termination of pairing with Software Application 1, the user device 102 may generate a new alert and/or notification, or update an already displayed alert and/or notification to indicate that Software Application 1 is no longer paired with another software application. In some embodiments, responsive to ending pairing with Software Application 1, the user device 102 may cease causing display of any alerts and/or notification in the GUI 400C.

The object pane 422C can include an object field 424C. The object field 424C can include a menu displaying one or more data objects. For example, a user may visualize a list of data objects associated with Software Application 1 via the menu of the object field 424C. The user may interact with the data objects. For example, the user may select or deselect one or more data objects. In the embodiment of FIG. 4C, the user has not selected any data objects within the menu of object field 424C.

FIG. 4C further illustrates an example GUI 402C of a software application 108 (labeled as "Software Application 3"). The GUI 402C can include one or more features and/or functions similar or identical to any of those described with respect to GUI 400C. The GUI 402C may be an interactive GUI. The GUI 402C may be displayed by a computing device, such as user device 102, which may comprise a computer, laptop, mobile device, tablet, phone, and/or the like. In some embodiments, the GUI 402C can be displayed on the user device 102 as part of an extension or plug-in to a browser where Software Application 3 may be executing. In some embodiments, the GUI 402C may be a native user interface such as a native user interface of Software Application 3. In some embodiments, the GUI 402C can be displayed in a scroll-down menu of a mobile device and/or tablet. The GUI 402C may be any user interface visualized by a user as the user interacts with Software Application 3.

The GUI 402C can receive one or more use inputs. The GUI 402C can facilitate pairing of two or more software applications. In some embodiments, the user device 102 may receive user input via GUI 402C, which may then allow the user device 102 to perform one or more operations based on the user input, such as sharing states among two or more software applications. In this way, the GUI 402C includes controls to pair and/or unpair two or more software applications.

In the example of FIG. 4C, GUI 402C includes a browser window 406C and a browser tab 412C associated with Software Application 3 that is executing in a browser. However, this is not intended to be limiting. Software Application 3 may execute in any multi-application execution environment, as described elsewhere herein.

The GUI 402C can include, but is not limited to, a pairing pane 416C, a pairing icon 420C, a first object pane 426C, and a second object pane 430C. The pairing pane 416C can include one or more features and/or functions similar or identical to any of those shown and/or described with reference to the pairing pane 414C. The pairing pane 416C can include a pairing field 417C. The pairing field 417C can include a menu for displaying indicia representative of one or more software applications that are launched, executing, open, and/or active. For example, a user may visualize a list of pairable software applications via the menu of the pairing field 417C. The user may interact with the visual indicia. For example, a user may select to pair or unpair one or more software applications. In the embodiment of FIG. 4C, the user has not selected any software applications for pairing with Software Application 3.

The pairing icon 420C can include one or more features and/or functions similar or identical to any of those shown and/or described with reference to the pairing icon 418C. The pairing icon 420C can be configured to indicate to a user that a software application (e.g., Software Application 3) is paired with another software application. In this way, the pairing icon 420C can be configured to dynamically change responsive to whether the state of Software Application 3 is shared with another software application. For example, the pairing icon 420C can change its appearance (e.g., shape, color, orientation, pattern, and/or the like) and/or location to indicate to the user that Software Application 3 is either unpaired or paired. The user device 102 can cause the pairing icon 420C to change in response to user initiation of pairing Software Application 3 with another software application. The user device 102 can cause continuous and/or persistent display of the pairing icon 420C in the GUI 402C. For example, the user device 102 may cause display of the changed pairing icon 420C for visualization by the user for the entire duration that Software Application 3 is paired with another software application. After (or upon) termination of pairing, the user device 102 can cause the pairing icon 420C to revert to its original appearance to indicate that Software Application 3 is no longer paired with another software application. In the example of FIG. 4B, the pairing icon 420C indicates to the user that Software Application 3 is unpaired.

The pairing icon 420C of the GUI 402C is not intended to be limiting. In some embodiments, the GUI 402C can include multiple different icons for indicating when Software Application 3 is paired or unpaired. In some embodiments, the user device 102 can cause generation and output of an alert and/or notification, such as in response to user initiation of pairing Software Application 3 with another software application. For example, after selecting a software application for pairing with Software Application 3, the user device 102 may generate an alert and/or notification and output the alert and/or notification in the GUI 402C. The user device 102 can cause continuous and/or persistent display of the alert and/or notification in the GUI 402C, such as for the entire duration that Software Application 3 is paired with another software application. The alert and/or notification may or may not include text phrases. After (or upon) termination of pairing with Software Application 3, the user device 102 may generate a new alert and/or notification, or update an already displayed alert and/or notification to indicate that Software Application 3 is no longer paired with another software application. In some embodiments, responsive to ending pairing with Software Application 3, the user device 102 may cease causing display of any alerts and/or notification in the GUI 402C.

The first object pane 426C can include one or more features similar or identical to any of those shown and/or described with reference to the object pane 422C. The first object pane 426C can include a first object field 428C. The first object field 428C can include a menu displaying one or more data objects. For example, a user may visualize a list of data objects via the menu of the first object field 428C. After (or upon) pairing Software Application 3 with another software application, the first object field 428C may automatically populate with data objects from said other software application. In some embodiments, the first object field 428C may populate with data objects from the other paired software application even though no data objects have been selected in said other software application. In the embodiment of FIG. 4C, the menu of the first object field 428C has not populated with any data objects.

The second object pane 430C can include one or more features similar or identical to any of those shown and/or described with reference to the object pane 422C or the first object pane 426C. The second object pane 430C can include a second object field 432C. The second object field 432C can include a menu displaying one or more data objects. For example, a user may visualize a list of data objects via the menu of the second object field 432C. After (or upon) selecting data objects in a software application that is paired with Software Application 3, the second object field 432C may automatically populate with the selected data objects. In the example of FIG. 4C, the menu of the second object field 432C has not populated with any data objects.

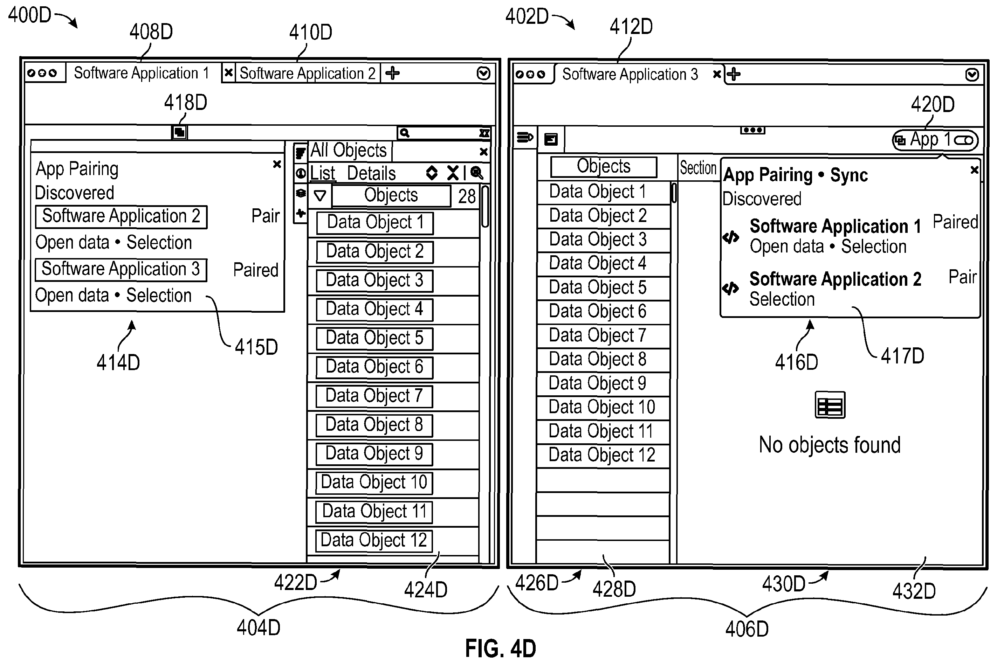

FIG. 4D illustrates an example GUI 400D of Software Application 1. The GUI 400D can include one or more features and/or functions that are similar or identical to any of those of GUI 400C, such as shown and/or described with reference to FIG. 4C. The GUI 400D may be an interactive GUI. The GUI 400D may be displayed by a computing device, such as user device 102 (see FIG. 1, for example), which may comprise a computer, laptop, mobile device, tablet, phone, and/or the like. In some embodiments, the GUI 400D can be displayed on the user device 102 as part of an extension or plug-in to a browser where Software Application 1 may be executing. In some embodiments, the GUI 400D may be a native user interface such as a native user interface of Software Application 1. In some embodiments, the GUI 400D can be displayed in a scroll-down menu of a mobile device and/or tablet. The GUI 400D may be any user interface visualized by a user as the user interacts with Software Application 1.

The GUI 400D can receive one or more use inputs. The GUI 400D can facilitate pairing of two or more software applications. In some embodiments, the user device 102 may receive user input via GUI 400D, which may then allow the user device 102 to perform one or more operations based on the user input, such as sharing states among two or more software applications. In this way, the GUI 400D includes controls to pair and/or unpair two or more software applications.

In the example of FIG. 4D, GUI 400D includes a browser window 404D and browser tabs 408D, 410D associated with Software Applications 1 and 2 that are executing in a browser. However, this is not intended to be limiting. Software Applications 1 and 2 may execute in any multi-application execution environment, as described elsewhere herein.

The GUI 400D can include, but is not limited to, a pairing pane 414D, a pairing icon 418D, and an object pane 422D. The pairing pane 414D can include one or more features and/or functions similar or identical to any of those of pairing pane 414C, such as shown and/or described with reference to FIG. 4C. For example, the pairing pane can include a pairing field 415D that includes one or more features and/or functions that are similar or identical to any of those of pairing field 415C, such as shown and/or described with reference to FIG. 4C. In the example of FIG. 4D, a user has initiated pairing of Software Application 1 with Software Application 3. Accordingly, visual indicia within the menu of the pairing field 415C indicate that Software Application 1 is paired to Software Application 3. For example, the menu of the pairing field 415C displays the text phrase "Software Application 3," and next to it, another text phrase "paired."

The pairing icon 418D can include one or more features and/or functions similar or identical to any of those of pairing icon 418C, such as shown and/or described with reference to FIG. 4C. In this way, the pairing icon 418D can be configured to indicate to a user that a software application (e.g., Software Application 1) is paired with another software application. In the embodiment of FIG. 4D, pairing icon 418D has changed its appearance in response to Software Application 1 pairing with Software Application 3. In some embodiments, pairing icon 418D may change its location in response to Software Application 1 pairing with Software Application 3.

The object pane 422D can include one or more features and/or functions similar or identical to any of those of object pane 422C, such as shown and/or described with reference to FIG. 4C. In this way, the object pane 422D can include an object field 424D that includes one or more features and/or functions similar or identical to any of those of object field 424C, such as shown and/or described with reference to FIG. 4C. In the embodiment of FIG. 4D, the user has not selected any data objects within the menu of object field 424D.

FIG. 4D further illustrates an example GUI 402D of Software Application 3. The GUI 402D can include one or more features and/or functions similar or identical to any of those of GUI 402C, such as shown and/or described with reference to FIG. 4C. The GUI 402D may be an interactive GUI. The GUI 402D may be displayed by a computing device, such as user device 102, which may comprise a computer, laptop, mobile device, tablet, phone, and/or the like. In some embodiments, the GUI 402D can be displayed on the user device 102 as part of an extension or plug-in to a browser where Software Application 3 may be executing. In some embodiments, the GUI 402D may be a native user interface such as a native user interface of Software Application 3. In some embodiments, the GUI 402D can be displayed in a scroll-down menu of a mobile device and/or tablet. The GUI 402D may be any user interface visualized by a user as the user interacts with Software Application 3.

The GUI 402D can receive one or more use inputs. The GUI 402D can facilitate pairing of two or more software applications. In some embodiments, the user device 102 may receive user input via GUI 402D, which may then allow the user device 102 to perform one or more operations based on the user input, such as sharing states among two or more software applications. In this way, the GUI 402D includes controls to pair and/or unpair two or more software applications.

In the example of FIG. 4D, GUI 402D includes a browser window 406D and a browser tab 412D associated with Software Application 3 that is executing in a browser. However, this is not intended to be limiting. Software Application 3 may execute in any multi-application execution environment, as described elsewhere herein.

The GUI 402D can include, but is not limited to, a pairing pane 416D, a pairing icon 420D, a first object pane 426D, and a second object pane 430D. The pairing pane 416D can include one or more features and/or functions similar or identical to any of those of pairing pane 416C, such as shown and/or described with reference to FIG. 4C. For example, the pairing pane can include a pairing field 417D that includes one or more features and/or functions that are similar or identical to any of those of pairing field 417C, such as shown and/or described with reference to FIG. 4C. In the example of FIG. 4D, a user has initiated pairing of Software Application 1 with Software Application 3. Accordingly, visual indicia within the menu of the pairing field 417C indicate that Software Application 3 is paired to Software Application 1. For example, the menu of the pairing field 417C displays the text phrase "Software Application 1," and next to it, another text phrase "paired."

The pairing icon 420D can include one or more features and/or functions similar or identical to any of those of pairing icon 420C, such as shown and/or described with reference to FIG. 4C. In this way, the pairing icon 420D can be configured to indicate to a user that a software application (e.g., Software Application 3) is paired with another software application. In the embodiment of FIG. 4D, pairing icon 420D has changed its appearance in response to Software Application 3 pairing with Software Application 1. In some embodiments, pairing icon 420D may change its location in response to Software Application 3 pairing with Software Application 1.

The first object pane 426D can include one or more features and/or functions similar or identical to any of those of the first object pane 426C, such as shown and/or described with reference to FIG. 4C. In this way, the first object pane 426D can include a first object field 428D that includes one or more features and/or functions similar or identical to any of those of the first object field 428C, such as shown and/or described with reference to FIG. 4C. In the embodiment of FIG. 4D, responsive to Software Application 3 pairing with Software Application 1, the menu of the first object field 428D has populated with the data objects from Software Application 1.

The second object pane 430D can include one or more features and/or functions similar or identical to any of those of the second object pane 430C, such as shown and/or described with reference to FIG. 4C. In this way, the second object pane 430D can include a first object field 432D that includes one or more features and/or functions similar or identical to any of those of the second object field 432C, such as shown and/or described with reference to FIG. 4C. In the example of FIG. 4D, the menu of the second object field 432C has not populated with any data objects.

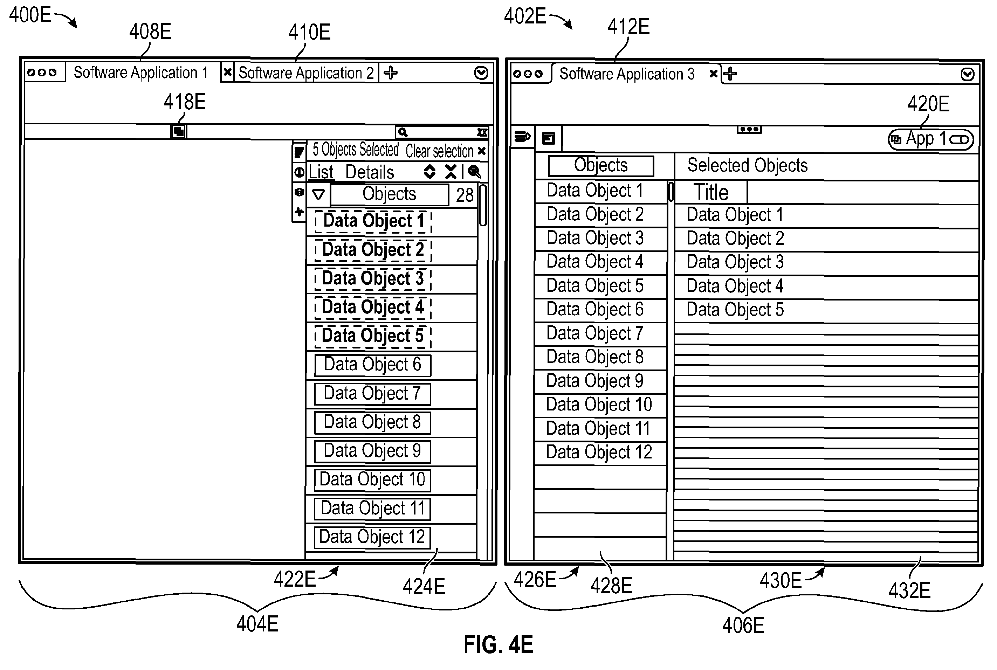

**FIG. 4E** illustrates an example GUI 400E of Software Application 1. The GUI 400E can include one or more features and/or functions that are similar or identical to any of those of GUI 400D, such as shown and/or described with reference to FIG. 4D. The GUI 400E may be an interactive GUI. The GUI 400E may be displayed by a computing device, such as user device 102 (see FIG. 1, for example), which may comprise a computer, laptop, mobile device, tablet, phone, and/or the like. In some embodiments, the GUI 400E can be displayed on the user device 102 as part of an extension or plug-in to a browser where Software Application 1 may be executing. In some embodiments, the GUI 400E may be a native user interface such as a native user interface of Software Application 1. In some embodiments, the GUI 400E can be displayed in a scroll-down menu of a mobile device and/or tablet. The GUI 400E may be any user interface visualized by a user as the user interacts with Software Application 1.

The GUI 400E can receive one or more use inputs. The GUI 400E can facilitate pairing of two or more software applications. In some embodiments, the user device 102 may receive user input via GUI 400E, which may then allow the user device 102 to perform one or more operations based on the user input, such as sharing states among two or more software applications. In this way, the GUI 400E includes controls to pair and/or unpair two or more software applications.

In the example of FIG. 4E, GUI 400E includes a browser window 404E and browser tabs 408E, 410E associated with Software Applications 1 and 2 that are executing in a browser. However, this is not intended to be limiting. Software Applications 1 and 2 may execute in any multi-application execution environment, as described elsewhere herein.

As depicted in FIG. 4E, the GUI 400E includes a pairing icon 418E and an object pane 422E. The pairing icon 418E can include one or more features and/or functions similar or identical to any of those of pairing icon 418D, such as shown and/or described with reference to FIG. 4D. In this way, the pairing icon 418E can be configured to indicate to a user that a software application (e.g., Software Application 1) is paired with another software application. In the embodiment of FIG. 4E, pairing icon 418E maintains its changed appearance to indicate, to a user, that Software Application 1 is still paired with Software Application 3. In some embodiments, pairing icon 418E may maintain a changed location to indicate that Software Application 1 is still paired with Software Application 3.

The object pane 422E can include one or more features and/or functions similar or identical to any of those of object pane 422D, such as shown and/or described with reference to FIG. 4D. In this way, the object pane 422E can include an object field 424E that includes one or more features and/or functions similar or identical to any of those of object field 424D, such as shown and/or described with reference to FIG. 4D. In the embodiment of FIG. 4D, the user has selected 5 data objects (Data Objects 1 through 5) within the menu of object field 424E.

FIG. 4E further illustrates an example GUI 402E of Software Application 3. The GUI 402E can include one or more features and/or functions similar or identical to any of those of GUI 402D, such as shown and/or described with reference to FIG. 4D. The GUI 402E may be an interactive GUI. The GUI 402E may be displayed by a computing device, such as user device 102, which may comprise a computer, laptop, mobile device, tablet, phone, and/or the like. In some embodiments, the GUI 402E can be displayed on the user device 102 as part of an extension or plug-in to a browser where Software Application 3 may be executing. In some embodiments, the GUI 402E may be a native user interface such as a native user interface of Software Application 3. In some embodiments, the GUI 402E can be displayed in a scroll-down menu of a mobile device and/or tablet. The GUI 402E may be any user interface visualized by a user as the user interacts with Software Application 3.

The GUI 402E can receive one or more use inputs. The GUI 402E can facilitate pairing of two or more software applications. In some embodiments, the user device 102 may receive user input via GUI 402E, which may then allow the user device 102 to perform one or more operations based on the user input, such as sharing states among two or more software applications. In this way, the GUI 402E includes controls to pair and/or unpair two or more software applications.

In the example of FIG. 4E, GUI 402E includes a browser window 406E and a browser tab 412E associated with Software Application 3 that is executing in a browser. However, this is not intended to be limiting. Software Application 3 may execute in any multi-application execution environment, as described elsewhere herein.

As depicted in FIG. 4E, the GUI 400E includes a pairing icon 420E, a first object pane 426E, and a second object pane 430E. The pairing icon 420E can include one or more features and/or functions similar or identical to any of those of pairing icon 420D, such as shown and/or described with reference to FIG. 4D. In this way, the pairing icon 420E can be configured to indicate to a user that a software application (e.g., Software Application 3) is paired with another software application. In the embodiment of FIG. 4E, pairing icon 420E maintains its changed appearance to indicate, to a user, that Software Application 3 is still paired with Software Application 1. In some embodiments, pairing icon 420E may maintain a changed location to indicate that Software Application 3 is still paired with Software Application 1.

The first object pane 426E can include one or more features and/or functions similar or identical to any of those of the first object pane 426D, such as shown and/or described with reference to FIG. 4D. In this way, the first object pane 426E can include a first object field 428E that includes one or more features and/or functions similar or identical to any of those of the first object field 428D, such as shown and/or described with reference to FIG. 4D. In the embodiment of FIG. 4E, the menu of the first object field 428E remains populated with the data objects from Software Application 1 as Software Application 3 remains paired with Software Application 1.

The second object pane 430E can include one or more features and/or functions similar or identical to any of those of the second object pane 430D, such as shown and/or described with reference to FIG. 4D. In this way, the second object pane 430E can include a first object field 432E that includes one or more features and/or functions similar or identical to any of those of the second object field 432D, such as shown and/or described with reference to FIG. 4D. As depicted in the example of FIG. 4E, responsive to selection of data objects in Software Application 1, the menu of the second object field 432E has populated with said selected data objects. The selected data objects correspond to Data Objects 1 through 5 that were selected, by a user, in the menu of the object field 424E of GUI 400E. The object field 432E may automatically populate with selected Data Objects 1 through 5 after (or upon) selection of said data objects in object field 424E.

### Example Routines Relating to Sharing State among Two or More Software Applications

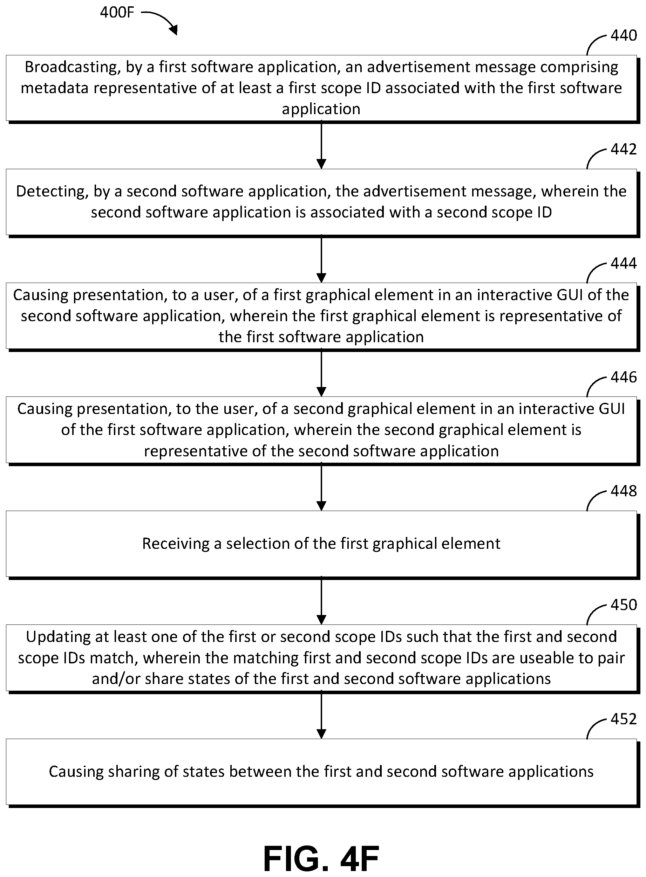

**FIG. 4F** is a diagram illustrating an example routine 400F for sharing states among two or more software applications (e.g., software application(s) 108). The routine 400F, or portions thereof, can be implemented by a computing device such as user device 102. In some embodiments, the routine 400F, or portions thereof, can be performed by a computing device associated with the user device 102, such as one or more hardware processors 104 described herein.

At block 440, a first software application can broadcast an advertisement message. The first software application can include an event emitter configured to initiate advertisement messages. The event emitter can include one or more features and/or functions similar or identical to any of those of event emitters shown and/or described with reference to FIGS. 4A-4B. The event emitter may be initialized via one or more specifications (e.g., specification(s) 110) and used by the first software application to consume and implement any of the discovery protocols described herein. For example, the event emitter can be implemented (e.g., in software) as part of a front-end client API of the specification(s) or within a library (e.g., library 112). In this way, client-side executable code associated with the event emitter may be bundled within a client-side application executable of the first software application, or may be included in the library, such as a library function.

In some embodiments, at block 440, a processor (e.g., hardware processor(s) 104) can execute the client-side code associated with the event emitter to initiate the advertisement message.

At block 440, the advertisement message can include metadata representative of a first scope identifier ("ID") associated with the first software application. The first scope ID can be a unique identifier for the first software application. The first scope ID can include one or more features and/or functions similar or identical to any of those of scope IDs shown and/or described with reference to FIGS. 4A-4B. For example, the first scope ID can be configured to enable other software applications to see the client-side state of the first software application. In some embodiments, the first scope ID can be a string that is unique to the first software application. In some embodiments, the first scope ID can be a set of metadata that is unique to the first software application.

At block 442, a second software application can detect and/or receive the advertisement message. The second software application can include an event listener configured to detect advertisement messages. The event listener can include one or more features and/or functions similar or identical to any of those of event listeners shown and/or described with reference to FIGS. 4A-4B. The event listener may be initialized via the specification(s) and used by the second software application to consume and implement any of the discovery protocols described herein. For example, the event listener can be implemented (e.g., in software) as part of a front-end client API of the specification(s) or within the library. In this way, client-side executable code associated with the event listener may be bundled within a client-side application executable of the second software application, or may be included in the library, such as a library function.

At block 442, the processor can execute the client-side code associated with the event listener to detect and/or receive the advertisement message.

In some embodiments, at block 442, the second software application can be associated with a second scope ID. The second scope ID can be a unique identifier for the second software application. The second scope ID can include one or more features and/or functions similar or identical to any of those of scope IDs shown and/or described with reference to FIGS. 4A-4B. For example, the second scope ID can be configured to enable other software applications to see the client-side state of the second software application. In some embodiments, the second scope ID can be a string that is unique to the second software application. In some embodiments, the second scope ID can be a set of metadata that is unique to the second software application.

At block 444, the processor can cause presentation, to a user, of a first graphical element in an interactive graphical user interface (GUI) of the second software application. The second software application can include an event handler configured to direct how a software application responds to detected and/or received advertisement messages. The event handler can include one or more features and/or functions similar or identical to any of those of event handlers shown and/or described with reference to FIGS. 4A-4B. The event handler may be initialized via the specification(s) and used by the second software application to consume and implement any of the discovery protocols described herein. For example, the event handler can be implemented (e.g., in software) as part of a front-end client API of the specification(s) or within the library. In this way, client-side executable code associated with the event handler may be bundled within a client-side application executable of the second software application, or may be included in the library, such as a library function.

At block 444, the processor can execute client-side code associated with the event handler to process the detected advertisement message and/or initiate an operation responsive to detecting the advertisement message. For example, the processor may generate and/or modify user interface data of the second software application. The user interface data may be rendered in the GUI of the second software application to generate visual indicia, such as the first graphical element. The processor may cause presentation of the first graphical element in a menu of the GUI of the second software application. In some embodiments, at block 444, the processor can cause presentation of the first graphical element in a display of the user device.

The first graphical element can be representative of the first software application. In some embodiments, the first graphical element can include a first graphical icon. The first graphical icon may be configured to dynamically change responsive to whether states of the first and second software applications are shared.

In some embodiments, the routine 400F may proceed to block 446. Although block 446 is illustrated in the example of FIG. 4F, this is not intended to be limiting. In some embodiments, the processor may perform block 446 in parallel with performing block 444. In some embodiments, the processor may perform block 446 before or after performing block 444. In some embodiments, the processor may not perform block 446 at all. Block 446, in some embodiments, may be combined with another block, such as block 444, for example.

At block 446, the processor can cause presentation, to a user, of a second graphical element in an interactive GUI of the first software application. For example, the first software application can include an event listener and/or handler similar or identical to the event listener and/or handler of the second software application. In this way, the first software application can detect and/or process any advertisement messages originating from the second software application, such as may include metadata representative of the second scope ID. In some embodiments, the first software application can initiate an operation in response to detecting and/or receiving advertisement messages.

At block 446, the processor may generate and/or modify user interface data of the first software application. The user interface data may be rendered in the GUI of the first software application to generate visual indicia, such as the second graphical element. The processor may cause presentation of the second graphical element in a menu of the GUI of the first software application. In some embodiments, at block 446, the processor can cause presentation of the second graphical element in the display of the user device.

The second graphical element can be representative of the second software application. In some embodiments, the second graphical element can include a second graphical icon. The second graphical icon may be configured to dynamically change responsive to whether states of the first and second software applications are shared.

At block 448, the processor can receive a selection of the first graphical element. For example, a user may interact with the GUI of the second software application and select the first graphical element. The user may select the first graphical element using a keyboard key, a cursor (e.g., a point and click mechanism), and/or a body part (e.g., a finger).

At block 450, the processor can update at least one of the first or second scope IDs such that the first and second scope IDs match. For example, the first and second scope IDs may be the same string. In some embodiments, the first and second scope IDs may be the same set of metadata. In some embodiments, at block 450, the first and second scope IDs may be useable to pair and/or share states of the first and second software applications.

In some embodiments, the routine 400F may proceed to block 452. Although block 452 is illustrated in the example of FIG. 4F, this is not intended to be limiting. In some embodiments, block 452 may be combined with other blocks, or may not be performed at all. At block 452, the processor can cause the first and second software applications to share their respective states among each other. For example, the processor can cause sharing of states between the first and second software applications based on the matching first and second scope IDs.

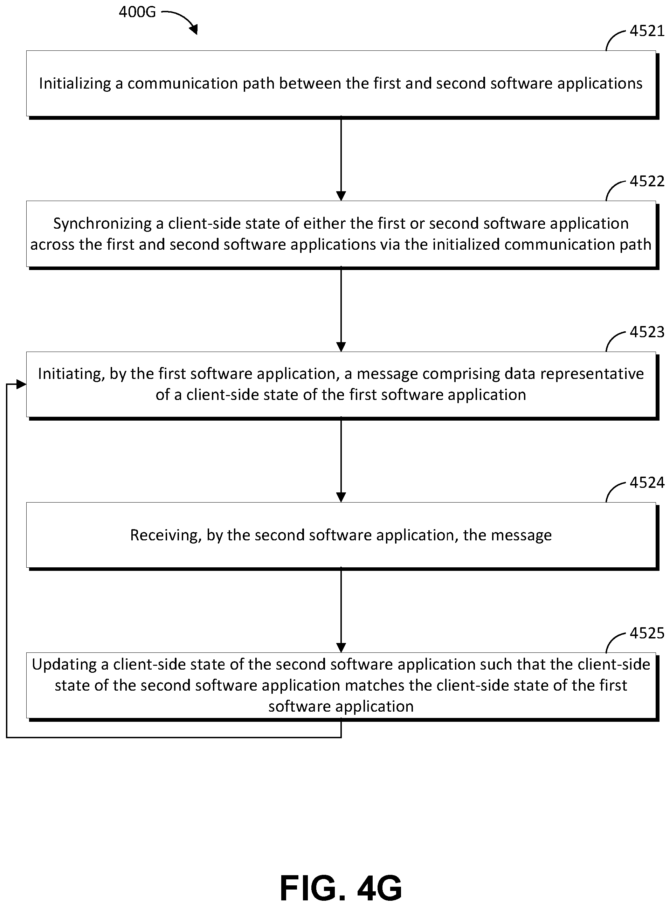

**FIG. 4G** is a diagram illustrating an example routine 400G for sharing states among two or more software applications (e.g., software application(s) 108). The routine 400G, or portions thereof, can be implemented by a computing device such as user device 102. In some embodiments, the routine 400G, or portions thereof, can be performed by a computing device associated with the user device 102, such as one or more hardware processors 104 described herein.

Although multiple blocks are illustrated in FIG. 4G, not all blocks may necessarily be performed in the ordinary course when performing routines associated with sharing states among two or more software applications. Moreover, although blocks depicted in FIG. 4G are illustrated in a particular order, this is not intended to be limiting. One or more blocks illustrated in FIG. 4G may be performed in one or more different orders, may be performed simultaneously, may be combined into fewer blocks, may be separated into additional blocks, or may not be performed at all.

At block 4521, a processor (e.g., hardware processor(s) 104) can initialize a communication path between a first and second software application, such as the first and second software applications shown and/or described with reference to FIG. 4F. The communication path can include one or more features and/or functions that are similar or identical to any of those of the shared state communication path 400A, such as shown and/or described with reference to FIGS. 4A-4B. For example, the communication path can be a client-side communication path that is configured to enable software applications that have initialized and/or joined the communication path to send and/or receive state messages via the communication path. In this way, the communication path may be isolated from any software applications that have not initialized and/or joined the communication path. For example, such software applications may not send or receive state messages via the communication path.

In some embodiments, at block 4521, the processor may call a front-end client API, such as a BroadcastChannel API, using either of the first or second scope IDs to initialize the communication path. Software applications may not initialize or join the communication path if their respective scope IDs do not match either of the first or second scope IDs of the first or second software applications. In this way, software applications associated with scope IDs that do not match either of the first or second scope IDs do not share state with either of the first or second software applications. For example, such software applications may not synchronize their client-side states with the client-side states of either of the first or second web applications.

At block 4522, the processor can synchronize a client-side state of either of the first or second software applications across the first and second software applications. For example, the processor may update either of the client-side states of the first and second software applications such that the client-side states of the first and second software applications match. In this way, at least a part of the current condition, configuration, and/or status of the first software application may be the same as that of the second software application, and vice versa.

At block 4523, the first software application can initiate a message, such as a state message. For example, the event emitter of the first software application (such as described with reference to FIG. 4F) can be further configured to initiate state messages. In this way, the processor can execute client-side code associated with the event emitter to initiate the state message.

The message can include data representative of the client-side state of the first software application. In some embodiments, the message can include data representative of an initial client-side state of the first software application. In some embodiments, the message can include data representative of a modified client-side state. Accordingly, the message can include one or more of: graphical user interface (GUI) data, application data, user input data, associated metadata, and other data associated with the client-side state of the first software application. In some embodiments, at block 4523, GUI data can include any of at least: graphical elements; textual elements; interactive input elements; navigational elements; information display elements; containers and layout elements; media controls; state indicators, aesthetic elements; and the like, such as described herein. At block 4523, in some embodiments, application data can include any of at least: lists, data (e.g., data objects), user preferences, configuration settings, filters, and the like. In some embodiments, at block 4523, user input data can include any of at least: scroll position, cursor position, keypresses, clicks, taps, inputted values, selected objects, and the like.

In some embodiments, at block 4523, the message can include data indicative of a state value. The state value can include one or more features and/or functions similar or identical to any of those of state values shown and/or described with reference to FIG. 4B. For example, the state value may be representative of any part of the client-side state of the first software application. In some embodiments, the state value may be configured to dynamically change responsive to user interaction with the first software application or other runtime events.

At block 4523, in some embodiments, the message can include a source ID associated with the first software application. For example, the message can include metadata representative of the source ID. The source ID can include one or more features and/or functions similar or identical to any of those of source IDs such as shown and/or described with reference to FIGS. 2A-2E and 4A-4B. For example, the source ID can be a unique identifier for the first software application. The source ID can be a string that is unique to the first software application. In some embodiments, the source ID can be a set of metadata that is unique to the first software application. At block.4523, the source ID can be configured to enable other software applications (e.g., the second software application) to determine that the initiated message originates from the first software application.

In some embodiments, at block 4523, the message can include a timestamp. For example, the message can include metadata representative of the timestamp. The timestamp can include one or more features and/or functions similar or identical to any of those of timestamps such as shown and/or described with reference to FIG. 4B. The timestamp can be representative of a time at which the message was initiated. In some embodiments, the timestamp can be representative of a time at which the client-side state at issue (e.g., the client-side state represented by the message) existed. For example, the timestamp can indicate when a client-side state of the first software application was modified, such as due to user interaction with the second software application or runtime events. In some embodiments, the timestamp can be associated with the state value. At block 4523, the timestamp may be configured to enable other software applications (e.g., the second software application) to determine when a client-side state of the first software application existed, such as when a modification to the client-side state of the first software application occurred.

At block 4524, the second software application can detect and/or receive the message. For example, the event listener of the second software application (such as described with reference to FIG. 4F) can be further configured to detect state messages. In this way, the processor can execute client-side code associated with the event listener to detect and/or receive the state message.

At block 4525, the processor can update the client-side state of the second software application to match that of the first software application. For example, the processor can update at least a part of the current condition, configuration, and/or status of the second software application to match that of the first software application. In some embodiments, at block 4525, the event handler of the second software application (such as described with reference to FIG. 4F) can be further configured to direct how the second software application responds to detected and/or received state messages. In this way, the processor can execute client-side code associated with the event handler to process the state message and/or cause the second software application to perform an operation based on the state message.

In some embodiments, at block 4525, the processor may parse the data included in the message to determine that the message originates from the first software application. The processor may make this determination based on the source ID included with the message.

At block 4525, in some embodiments, the processor may parse the data included in the message to determine the time at which message was sent. The processor may make this determination based on the timestamp included in the message. In some embodiments, the timestamp can be indicative of a time at which a particular client-side state of the first software application existed. For example, the timestamp can indicate a time at which the client-side state of the first software application was modified, such as due to user interaction or other runtime events.

In some embodiments, the processor may be configured to determine whether to update the client-side state of the second software application based at least in part on the source ID and/or the timestamp included in the message. In some embodiments, the processor may be configured to determine whether to update the client-side state of the second software application based on a comparison between timestamps of new and old state messages. For example, the processor may compare the timestamp of the state message last received by the second software application to the timestamp of a new, incoming state message. If the timestamp of the new message is greater (e.g., later in time) than the timestamp of the last received state message, the processor may update the client-side state of the second software application. Accordingly, the processor may update a state value of the second software application to the state value included in the new message. If the timestamp of the new message is less (e.g., earlier in time) than the timestamp of the last received message, the processor may not update the client-side state of the second software application. Thus, the processor may not update a state value of the second software application to the state value included in the new message.

In some embodiments, the processor may be configured to determine whether to update the client-side state of the second software application based on a comparison between source IDs of new and old state messages. For example, the processor may compare the source ID of the state message last received by the second software application to the source ID of a new, incoming state message. In this way, the processor may be configured to implement a string-compare function to compare source IDs. If the source ID of the new message is greater (e.g., the string of the source ID is later in lexicographic order) than the source ID of the last received state message, the processor may update the client-side state of the second software application. Accordingly, the processor may update a state value of the second software application to the state value included in the new message. If the source ID of the new message is less (e.g., the string of the source ID is earlier in lexicographic order) than the source ID of the last received state message, the processor may not update the client-side state of the second software application. Thus, the processor may not update a state value of the second software application to the state value included in the new message. In some embodiments, the processor may be configured to compare source IDs of different state messages when the timestamps of said messages are the same.

The processor may be configured to perform blocks 4523 through 4525 in an open or closed loop. For example, the processor may perform any of blocks 4523 through 4525 while the first software application is paired with the second software application such that any modifications to a client-side state of the first software application can be synchronized across the second software application.

### Additional Example Implementations and Details

In an implementation, the systems or devices described herein (e.g., one or more aspects of the computing environment 100, user device 102, and/or the like) may comprise, or be implemented in, a "virtual computing environment". As used herein, the term "virtual computing environment" should be construed broadly to include, for example, computer-readable program instructions executed by one or more processors to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

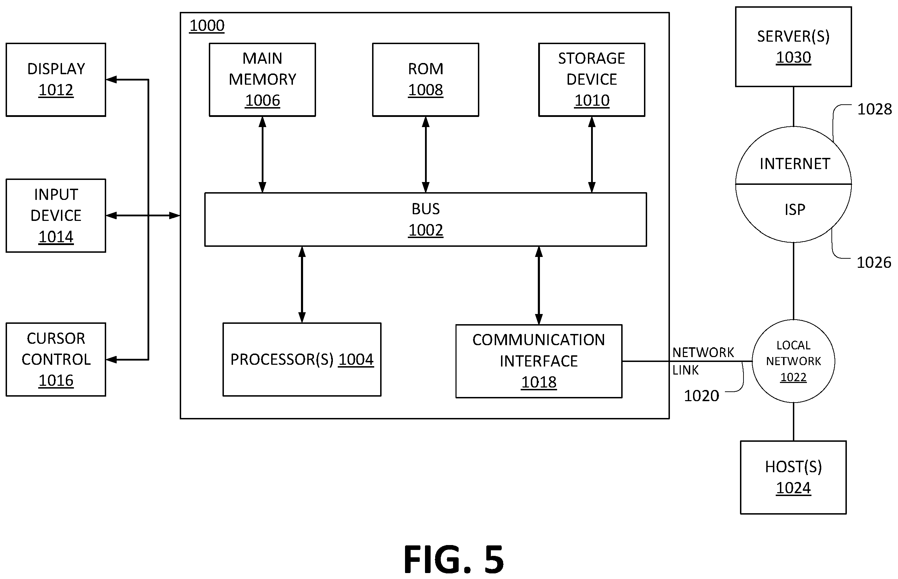

For example, FIG. 5 shows a block diagram that illustrates a computer system 1000 upon which various implementations and/or aspects (e.g., one or more aspects of the computing environment 100, user device 102, and/or the like) may be implemented. Multiple such computer systems 1000 may be used in various implementations of the present disclosure. Computer system 1000 includes a bus 1002 or other communication mechanism for communicating information, and a hardware processor, or multiple processors, 1004 coupled with bus 1002 for processing information. Hardware processor(s) 1004 may be, for example, one or more general purpose microprocessors.

Computer system 1000 also includes a main memory 1006, such as a random-access memory (RAM), cache and/or other dynamic storage devices, coupled to bus 1002 for storing information and instructions to be executed by processor 1004. Main memory 1006 also may be used for storing temporary variables or other intermediate information during execution of instructions to be executed by processor 1004. Such instructions, when stored in storage media accessible to processor 1004, render computer system 1000 into a special-purpose machine that is customized to perform the operations specified in the instructions. The main memory 1006 may, for example, include instructions to implement server instances, queuing modules, memory queues, storage queues, user interfaces, and/or other aspects of functionality of the present disclosure, according to various implementations.

Computer system 1000 further includes a read only memory (ROM) 1008 or other static storage device coupled to bus 1002 for storing static information and instructions for processor 1004. A storage device 1010, such as a magnetic disk, optical disk, or USB thumb drive (Flash drive), and/or the like, is provided and coupled to bus 1002 for storing information and instructions.

Computer system 1000 may be coupled via bus 1002 to a display 1012, such as a cathode ray tube (CRT) or LCD display (or touch screen), for displaying information to a computer user. An input device 1014, including alphanumeric and other keys, is coupled to bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 1000 may include a user interface module to implement a GUI that may be stored in a mass storage device as computer executable program instructions that are executed by the computing device(s). Computer system 1000 may further, as described below, implement the techniques described herein using customized hard-wired logic, one or more ASICs or FPGAs, firmware, and/or program logic which in combination with the computer system causes or programs computer system 1000 to be a special-purpose machine. According to one implementation, the techniques herein are performed by computer system 1000 in response to processor(s) 1004 executing one or more sequences of one or more computer-readable program instructions contained in main memory 1006. Such instructions may be read into main memory 1006 from another storage medium, such as storage device 1010. Execution of the sequences of instructions contained in main memory 1006 causes processor(s) 1004 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1004 for execution. For example, the instructions may initially be carried on a magnetic disk or solid-state drive of a remote computer. The remote computer can load the instructions into its dynamic memory and send the instructions over a telephone line using a modem. A modem local to computer system 1000 can receive the data on the telephone line and use an infra-red transmitter to convert the data to an infra-red signal. An infra-red detector can receive the data carried in the infra-red signal and appropriate circuitry can place the data on bus 1002. Bus 1002 carries the data to main memory 1006, from which processor 1004 retrieves and executes the instructions. The instructions received by main memory 1006 may optionally be stored on storage device 1010 either before or after execution by processor 1004.

Computer system 1000 also includes a communication interface 1018 coupled to bus 1002. Communication interface 1018 provides a two-way data communication coupling to a network link 1020 that is connected to a local network 1022. For example, communication interface 1018 may be an integrated services digital network (ISDN) card, cable modem, satellite modem, or a modem to provide a data communication connection to a corresponding type of telephone line. As another example, communication interface 1018 may be a local area network (LAN) card to provide a data communication connection to a compatible LAN (or WAN component to communicate with a WAN). Wireless links may also be implemented. In any such implementation, communication interface 1018 sends and receives electrical, electromagnetic, or optical signals that carry digital data streams representing various types of information.

Network link 1020 typically provides data communication through one or more networks to other data devices. For example, network link 1020 may provide a connection through local network 1022 to a host computer 1024 or to data equipment operated by an Internet Service Provider (ISP) 1026. ISP 1026 in turn provides data communication services through the worldwide packet data communication network now commonly referred to as the "Internet" 1028. Local network 1022 and Internet 1028 both use electrical, electromagnetic, or optical signals that carry digital data streams. The signals through the various networks and the signals on network link 1020 and through communication interface 1018, which carry the digital data to and from computer system 1000, are example forms of transmission media.

Computer system 1000 can send messages and receive data, including program code, through the network(s), network link 1020 and communication interface 1018. In the Internet example, a server 1030 might transmit a requested code for an application program through Internet 1028, ISP 1026, local network 1022 and communication interface 1018.

The received code may be executed by processor 1004 as it is received, and/or stored in storage device 1010, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds at which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Aspects

Examples of implementations of the present disclosure can be described in view of the following example aspects or aspects. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example aspects below, or any features of the example aspects, can be combined with any one or more other example aspects, or features of the example aspects or other features of the present disclosure.

Aspect 1. A computer-implemented method for messaging among two or more web applications, the computer-implemented method comprising, by one or more processors executing program instructions: broadcasting, by a first web application executing in a web browser, an advertisement message, wherein the advertisement message comprises metadata representative of at least a first application identifier (ID) associated with the first web application and a capability of the first web application; detecting, by a second web application executing in the web browser, the advertisement message, wherein the second web application is associated with a second application ID; detecting, by the second web application, that the capability of the first web application includes a messaging capability; and initiating, by the second web application, a first message comprising metadata representative of at least: a first source ID associated with the second web application, a first target ID associated with the first web application, and a first message ID associated with the first message, wherein the first target ID is configured to enable the second web application that is sending the first message to target the first web application for messaging, wherein the first source ID is configured to enable the first web application to determine that the first message originated from the second software application, and wherein the first message ID is configured to enable the first web application to respond to the first message.

Aspect 2. The computer-implemented method of Aspect 1, wherein the advertisement message originating from the first web application indicates that the first web application is discoverable by at least the second web application.

Aspect 3. The computer-implemented method of any of Aspects 1-2, wherein the first target ID is a unique identifier for the first web application, and wherein the first source ID is a unique identifier for the second web application.

Aspect 4. The computer-implemented method of any of Aspects 1-3 further comprising, by the one or more processors executing program instructions: receiving, by the first web application, the first message; and determining, by the first web application, based on the first source ID that the first message originated from the second web application.

Aspect 5. The computer-implemented method of Aspect 4 further comprising, by the one or more processors executing program instructions: responsive to receiving the first message, initiating, by the first web application, a second message comprising metadata representative of at least: a second source ID associated with the first web application, a second target ID associated with the second web application, a second message ID associated with the second message, and a parent message ID associated with the first message, wherein the second target ID is configured to enable the first web application that is sending the second message to target the second web application for messaging, wherein the second source ID is configured to enable the second web application to determine that the second message originated from the first web application, and wherein the second message ID is configured to enable the second web application to respond to the second message.

Aspect 6. The computer-implemented method of Aspect 5, wherein the parent message ID is configured to enable the first web application to respond to the first message via the second message.

Aspect 7. The computer-implemented method of Aspect 6, wherein the first message ID is a unique identifier for the first message, and wherein the second message ID is a unique identifier for the second message.

Aspect 8. The computer-implemented method of any of Aspects 5-7, wherein the parent message ID and the first message ID are the same.

Aspect 9. The computer-implemented method of any of Aspects 5-8, wherein the second target ID is a unique identifier for the second web application, and wherein the second source ID is a unique identifier for the first web application.

Aspect 10. The computer-implemented method of any of Aspects 5-9, wherein the first target ID and the second source ID are the same.

Aspect 11. The computer-implemented method of any of Aspects 5-10, wherein the second target ID and the first source ID are the same.

Aspect 12. The computer-implemented method of any of Aspects 1-11, wherein broadcasting the advertisement message by the first web application comprises: broadcasting the advertisement message at run-time.

Aspect 13. The computer-implemented method of any of Aspects 1-12 further comprising, by the one or more processors executing program instructions: periodically broadcasting, by the first web application, the advertisement message while the first web application is running.

Aspect 14. The computer-implemented method of Aspect 13, wherein periodically broadcasting the advertisement message comprises: broadcasting the advertisement message at discrete time intervals.

Aspect 15. The computer-implemented method of any of Aspects 1-14 further comprising, by the one or more processors executing program instructions: broadcasting, by the second web application, a discover message configured to elicit the advertisement message from at least the first web application.

Aspect 16. The computer-implemented method of any of Aspects 1-15 further comprising, by the one or more processors executing program instructions: broadcasting, by the first web application, when the first web application is terminated, a stop-advertising message, wherein the stop-advertising message indicates that the first web application is no longer discoverable by at least the second web application.

Aspect 17. The computer-implemented method of any of Aspects 1-16 further comprising, by the one or more processors executing program instructions: determining, by the second web application, that the advertisement message originating from the first web application has not been detected for a certain period of time.

Aspect 18. The computer-implemented method of any of Aspects 1-17 further comprising, by the one or more processors executing program instructions: determining, by the second web application, that the first web application is no longer discoverable.

Aspect 19. A system comprising: one or more computer-readable storage mediums or devices comprising, configured to store, and/or storing program instructions; and one or more processors configured to execute the program instructions to cause the system to perform the computer-implemented method of any of Aspects 1-18.

Aspect 20. One or more computer-readable storage mediums or devices comprising, configured to store, and/or storing program instructions, the program instructions executable by one or more processors to cause the one or more processors to perform the computer-implemented method of any of Aspects 1-18.

Aspect 21. A computer-implemented method for detecting commands among two or more web applications, the computer-implemented method comprising, by one or more processors executing program instructions: detecting or accessing, by a first web application executing in a web browser, a description representative of a command associated with a second web application, wherein the command is indicative of a capability of the second web application, and wherein the capability is associated with an action that is performable by the second web application; causing presentation, to a user, of a graphical element in an interactive graphical user interface (GUI) of the first web application, wherein the graphical element is representative of the command associated with the second web application; receiving, via the first web application, a selection of the graphical element; and responsive to the selection of the graphical element, causing execution of the command by the second web application.

Aspect 22. The computer-implemented method of Aspect 21, wherein, prior to causing execution of the command, the second web application is unlaunched and/or not executing in the web browser.

Aspect 23. The computer-implemented method of any of Aspects 21-22, wherein causing execution of the command comprises: causing the second web application to launch and/or begin executing in the web browser.

Aspect 24. The computer-implemented method of Aspect 23, wherein causing the second web application to launch and/or begin executing is performed automatically without requiring additional user activity.

Aspect 25. The computer-implemented method of any of Aspects 21-24, wherein the command comprises a unique identifier (UID) associated with the action performable by the second web application and a resource identifier (RID) associated with a resource used in performing the action.

Aspect 26. The computer-implemented method of Aspect 25, wherein causing execution of the command comprises: initiating, by the first web application, a message using the UID of the command and the RID of the command.

Aspect 27. The computer-implemented method of Aspect 26, wherein the message comprises at least: a message type associated with the UID of the command and a payload associated with the RID of the command.

Aspect 28. The computer-implemented method of Aspect 27, wherein the payload comprises data useable by the second web application in performing the action.

Aspect 29. The computer-implemented method of any of Aspects 26-28, wherein the message comprises a target ID associated with the second web application.

Aspect 30. The computer-implemented method of Aspect 29, wherein the target ID associated with the second web application is a unique identifier for the second web application, and wherein the target ID is configured to enable the first web application to target the second web application for messaging.

Aspect 31. The computer-implemented method of any of Aspects 26-30 further comprising, by one or more processors executing program instructions: receiving, by the second web application, the message; and performing, by the second web application, the action based on the message.

Aspect 32. The computer-implemented method of any of Aspects 21-31, wherein the command is assigned to the graphical element in the interactive GUI of the first web application, the graphical element comprising at least one of: an icon, a text phrase, a menu option, and a sub-menu option.

Aspect 33. The computer-implemented method of any of Aspects 21-32, wherein causing presentation, to the user, of the graphical element comprises: causing presentation of the graphical element on a display of a user device.

Aspect 34. The computer-implemented method of any of Aspects 21-33, wherein the command is assigned to a keyboard key and/or a button.

Aspect 35. The computer-implemented method of any of Aspects 21-34, wherein the description representative of the command is a static description configured to be detectable and/or accessible by the first web application when the second web application is not launched and/or not executing.

Aspect 36. The computer-implemented method of any of Aspects 21-34, wherein the description representative of the command is a dynamic description configured to be detectable and/or accessible by the first web application at runtime of the second web application.

Aspect 37. The computer-implemented method of any of Aspects 21-36, wherein the description representative of the command is configured to be detectable and/or accessible by the first web application without a user knowing from which web application the associated action originates.

Aspect 38. The computer-implemented method of any of Aspects 21-37, wherein the second web application is unknown to a user.

Aspect 39. The computer-implemented method of any of Aspects 21-38, wherein the first web application and the second web application are stored on a user device.

Aspect 40. The computer-implemented method of any of Aspects 21-39, wherein the description representative of the command is provided to the first web application via a library included in the first web application.

Aspect 41. The computer-implemented method of Aspect 21 further comprising, by one or more processors executing program instructions: detecting or receiving, by the first web application, a response originating from the second web application; and performing, by the first web application, an action based on the response.

Aspect 42. A system comprising: one or more computer-readable storage mediums or devices comprising, configured to store, and/or storing program instructions; and one or more processors configured to execute the program instructions to cause the system to perform the computer-implemented method of any of Aspects 21-41.

Aspect 43. One or more computer-readable storage mediums or devices comprising, configured to store, and/or storing program instructions, the program instructions executable by one or more processors to cause the one or more processors to perform the computer-implemented method of any of Aspects 21-41.

Aspect 44. A computer-implemented method for sharing states among two or more web applications, the computer-implemented method comprising, by one or more processors executing program instructions: broadcasting, by a first web application executing in a web browser, an advertisement message, wherein the advertisement message comprises metadata representative of at least a first scope ID associated with the first web application; detecting, by a second web application executing in the web browser, the advertisement message, wherein the second web application is associated with a second scope ID; based on the advertisement message of the first web application, causing presentation, to a user, of a first graphical element in an interactive graphical user interface (GUI) of the second web application, wherein the first graphical element is representative of the first web application; receiving a selection of the first graphical element; and responsive to receiving the selection of the first graphical element, updating at least one of the first or second scope IDs such that the first and second scope IDs match, wherein the matching first and second scope IDs are usable to pair and/or share states of the first and second web applications.

Aspect 45. The computer-implemented method of Aspect 44, wherein causing presentation, to the user, of the first graphical element comprises: causing presentation of the first graphical element in a menu of the interactive GUI of the second web application.

Aspect 46. The computer-implemented method of any of Aspects 44-45, wherein the first graphical element comprises a first graphical icon.

Aspect 47. The computer-implemented method of Aspect 46, wherein the first graphical icon is configured to dynamically change responsive to whether the states of the first and second web applications are shared.

Aspect 48. The computer-implemented method of any of Aspects 44-47 further comprising, by one or more processors executing program instructions: causing presentation, to the user, of a second graphical element in an interactive GUI of the first web application, wherein the graphical element is representative of the second web application.

Aspect 49. The computer-implemented method of Aspect 48, wherein causing presentation, to the user, of the second graphical element comprises: causing presentation of the second graphical element in a menu of the interactive GUI of the first web application.

Aspect 50. The computer-implemented method of any of Aspects 48-49, wherein the second graphical element comprises a second graphical icon.

Aspect 51. The computer-implemented method of Aspect 50, wherein the second graphical icon is configured to dynamically change responsive to whether the states of the first and second web applications are shared.

Aspect 52. The computer-implemented method of any of Aspects 44-51 further comprising, by the one or more processors executing program instructions: further responsive to receiving the selection of the first graphical element, causing sharing of states between the first and second web applications based on the matching first and second scope IDs.

Aspect 53. The computer-implemented method of Aspect 52, wherein causing sharing of states between the first and second web applications comprises: initializing a communication path between the first and second web applications.

Aspect 54. The computer-implemented method of Aspect 53, wherein causing sharing of states between the first and second web applications further comprises: synchronizing a client-side state of either the first or second web application across the first and second web applications via the initialized communication path.

Aspect 55. The computer-implemented method of Aspect 54, wherein the client-side state comprises any of: GUI data, application data, user input data, and associated metadata.

Aspect 56. The computer-implemented method of Aspect 55, wherein application data is representative of at least one of: lists, data objects, user preferences, configuration settings, or filters.

Aspect 57. The computer-implemented method of Aspect 55, wherein user input data is representative of at least one of: scroll position, cursor position, keypresses, clicks, taps, inputted values, or selected objects.

Aspect 58. The computer-implemented method of any of Aspects 56-57, wherein synchronizing the client-side states of either of the first or second web applications comprises: initiating, by the first web application, a message comprising data representative of at least the client-side state of the first web application.

Aspect 59. The computer-implemented method of Aspect 58, wherein synchronizing the client-side states of either of the first or second web applications further comprises: receiving, by the second web application, the message indicative of the client-side state of the first web application; and updating a client-side state of the second web application such that the client-side state of the second web application matches the client-side state of the first web application.

Aspect 60. The computer-implemented method of any of Aspects 53-59, wherein the communication path is isolated from other web applications whose scope IDs do not match either of the first or second scope IDs.

Aspect 61. The computer-implemented method of Aspect 44, wherein other web applications associated with scope IDs that do not match either of the first or second scope IDs do not share state with either of the first and second web applications and do not synchronize their client-side states with the client-side states of either the first or second web applications.

Aspect 62. A system comprising: one or more computer-readable storage mediums or devices comprising, configured to store, and/or storing program instructions; and one or more processors configured to execute the program instructions to cause the system to perform the computer-implemented method of any of Aspects 44-61.

Aspect 63. One or more computer-readable storage mediums or devices comprising, configured to store, and/or storing program instructions, the program instructions executable by one or more processors to cause the one or more processors to perform the computer-implemented method of any of Aspects 44-61.

## Claims

1. A computer-implemented method for messaging among two or more web applications, the computer-implemented method comprising, by one or more processors executing program instructions:
broadcasting, by a first web application executing in a web browser, an advertisement message, wherein the advertisement message comprises metadata representative of at least a first application identifier (ID) associated with the first web application and a capability of the first web application;
detecting, by a second web application executing in the web browser, the advertisement message, wherein the second web application is associated with a second application ID;
detecting, by the second web application, that the capability of the first web application includes a messaging capability; and
initiating, by the second web application, a first message comprising metadata representative of at least: a first source ID associated with the second web application, a first target ID associated with the first web application, and a first message ID associated with the first message,
wherein the first target ID is configured to enable the second web application that is sending the first message to target the first web application for messaging,
wherein the first source ID is configured to enable the first web application to determine that the first message originated from the second web application, and
wherein the first message ID is configured to enable the first web application to respond to the first message.

2. The computer-implemented method of Claim 1, wherein the advertisement message originating from the first web application indicates that the first web application is discoverable by at least the second web application.

3. The computer-implemented method of Claim 1-2, wherein the first target ID is a unique identifier for the first web application, and wherein the first source ID is a unique identifier for the second web application.

4. The computer-implemented method of any of Claims 1-3 further comprising, by the one or more processors executing program instructions:
receiving, by the first web application, the first message; and
determining, by the first web application, based on the first source ID that the first message originated from the second web application.

5. The computer-implemented method of Claim 4 further comprising, by the one or more processors executing program instructions:
responsive to receiving the first message, initiating, by the first web application, a second message comprising metadata representative of at least: a second source ID associated with the first web application, a second target ID associated with the second web application, a second message ID associated with the second message, and a parent message ID associated with the first message,
wherein the second target ID is configured to enable the first web application that is sending the second message to target the second web application for messaging,
wherein the second source ID is configured to enable the second web application to determine that the second message originated from the first web application, and
wherein the second message ID is configured to enable the second web application to respond to the second message.

6. The computer-implemented method of Claim 5, wherein the parent message ID is configured to enable the first web application to respond to the first message via the second message.

7. The computer-implemented method of Claim 6, wherein the first message ID is a unique identifier for the first message, and wherein the second message ID is a unique identifier for the second message.

8. The computer-implemented method of any of Claims 5-7, wherein the parent message ID and the first message ID are the same.

9. The computer-implemented method of any of Claims 5-8, wherein the second target ID is a unique identifier for the second web application, and wherein the second source ID is a unique identifier for the first web application.

10. The computer-implemented method of any of Claims 5-9, wherein, at least one of:
the first target ID and the second source ID are the same; or
the second target ID and the first source ID are the same.

11. The computer-implemented method of any of Claims 1-10, wherein broadcasting the advertisement message by the first web application comprises:
broadcasting the advertisement message at run-time.

12. The computer-implemented method of any of Claims 1-11 further comprising, by the one or more processors executing program instructions:
periodically broadcasting, by the first web application, the advertisement message while the first web application is running;
wherein, optionally, periodically broadcasting the advertisement message comprises:
broadcasting the advertisement message at discrete time intervals.

13. The computer-implemented method of any of Claims 1-12 further comprising, by the one or more processors executing program instructions, at least one of:
broadcasting, by the second web application, a discover message configured to elicit the advertisement message from at least the first web application;
broadcasting, by the first web application, when the first web application is terminated, a stop-advertising message, wherein the stop-advertising message indicates that the first web application is no longer discoverable by at least the second web application;
determining, by the second web application, that the advertisement message originating from the first web application has not been detected for a certain period of time; or
determining, by the second web application, that the first web application is no longer discoverable.

14. A system comprising:
one or more computer-readable storage mediums or devices comprising, configured to store, and/or storing program instructions; and
one or more processors configured to execute the program instructions to cause the system to perform the computer-implemented method of any of Claims 1-13.

15. Computer program instructions executable by one or more processors to cause the one or more processors to perform the computer-implemented method of any of Claims 1-13.
